# EUROPEAN PATENT SPECIFICATION

(11) **EP 1 342 175 B1**
(45) Date of publication and mention of the grant of the patent: **02.01.2008**
(21) Application number: 01270842.6
(22) Date of filing: 11.12.2001
(51) Int. Cl.: G06F 17/30

(54) **METHOD OF INDEXING ENTITIES**
VERFAHREN ZUM INDIZIEREN VON ENTITÄTEN
PROCEDE D'INDEXAGE D'ENTITES

(30) Priority: 15.12.2000 EP 00311234; 15.12.2000 EP 00311228; 26.09.2001 GB 0123154
(43) Date of publication of application: 10.09.2003
(73) Proprietor: BRITISH TELECOMMUNICATIONS public limited company, London EC1A 7AJ (GB)
(72) Inventor: CRABTREE, Ian, Barry, Ipswich, Suffolk IP9 2NN (GB)
(74) Representative: Sayer, Robert David
(86) International application number: PCT/GB2001/005486
(87) International publication number: WO 2002/048909

(56) References cited:
- US-A- 5 963 956
- US-A- 6 161 105
- OOI B C ET AL: "SPATIAL KD-TREE: AN INDEXING MECHANISM FOR SPATIAL DATABASE" PROCEEDINGS OF THE ANNUAL INTERNATIONAL COMPUTER SOFTWARE AND APPLICATIONS CONFERENCE. (COMPSAC). TOKYO, OCT. 7 - 9, 1987, WASHINGTON, IEEE COMP. SOC. PRESS, US, vol. CONF. 11, 7 October 1987 (1987-10-07), pages 433-438, XP000039784
- MATSUYAMA T ET AL: "A FILE ORGANIZATION FOR GEOGRAPHIC INFORMATION SYSTEMS BASED ON SPATIAL PROXIMITY" COMPUTER VISION GRAPHICS AND IMAGE PROCESSING, ACADEMIC PRESS, DULUTH, MA, US, vol. 26, no. 3, 1 June 1984 (1984-06-01), pages 303-318, XP000718799
- VARMA H P ET AL: "A DATA STRUCTURE FOR SPATIO-TEMPORAL DATABASES" INTERNATIONALE HYDROGRAPHIC REVIEW, INTERNATIONAL HYDROGRAPHIC BUREAU, MONACO, MC, vol. 67, no. 1, 1990, pages 71-92, XP000565997 ISSN: 0020-6946

## Description

The present invention relates to a method of indexing for use with entities stored in a database.

It can readily be seen that when there are vast numbers of entities in a database, identifying entities in accordance with a query in respect of data in the database within a reasonable period of time is a non-trivial exercise. To ease the retrieval process, data in a database is generally indexed in some way, and queries are then performed on the index. The way in which the entities are indexed can be expected to have a significant bearing on the quality and speed of retrieval, and as information is increasingly being stored in databases, there is significant interest in finding improved ways of indexing data.

It is known to index location data based on place names. It is also known to retrieve a set of geographic coordinates from place names, and build an index based on topological information extracted from the coordinates (e.g. "GIPSY": developed at U.C. Berkeley in conjunction with a joint NSF/NASA/ARPA (Wilensky et al., 1994) initiative). Furthermore, it is known to build an index based on the geographical coordinates themselves: database vendors such as Oracle^{™} have developed systems for storing and indexing geometrical data - e.g. Oracle spatial data cartridge, which allows a spatial querying to be carried out using an extended (non-standard) form of SQL. Other vendors, like MapInfo^{™}, SpatialWare^{™}, lnnogistic^{™} and Informix^{™} have similar proprietary ways of dealing with spatial data. In particular, Innogistic^{™} have developed a product known as Cartology DSI, which stores geometrical vector data as blobs (binary large objects - which are not intrinsically recognisable by the underlying database). It also creates indexes outside of the database based on the well-known 'quad tree' idea. The index data is stored in binary-tree structures and is accessed by Distributed Component Object Model (DCOM) middleware services.

Both the Oracle^{™} and Innogistic^{™} systems make use of the quad-tree method, in which an entire area of a layer is divided and subdivided into a series of four nested squares. The entire area is assigned to one of four squares designated 0,1,2, and 3. Each of these squares is subdivided into four smaller squares. The area of square 1 becomes 10, 11, 12, and 13. Each of these is further subdivided, meaning, for example, that the subdivisions of square 11 would be assigned index values of 110, 111, 112, and 113. As a result, any location in the map can be referred to by a single index number. The disadvantage with this quad-tree method is that processing time is wasted if there are no points within the subdivided squares; if indexing is performed over a large area, this wasted processing time is non-trivial and costly.

US patent US 6,161,105 describes a system whereby multidimensional data is represented by binary hyperspatial code (BH code), which allows it to be indexed using the quad tree method.

An alternative indexing method is the k-dimensional binary search tree method, described by J. L. Bentley in "Multidimensional binary search trees for associative searching", Commun. ACM 18(9), 1975, 509 - 517. In this method, the vertical and horizontal sides of a region containing points to be indexed are compared, and the region is split into two parts by a straight line that is perpendicular to the longer side. The position of the dividing, or partitioning, line is determined such that each resulting part contains the same amount of data. This method is recursively applied to each of the two parts until a predetermined criterion is met. Typically, this criterion is related to the capacity of a page in a relational database (i.e. storage constraints of the database). The partitioned parts are represented as nodes in a binary tree, and the positions of dividing lines between parts determines the position of a node, relative to other nodes, in the tree. This method is particularly efficient for retrieval of points relating to an area of interest since sections of the search space (binary tree) can be eliminated by simple comparison between the area of interest and the dividing lines of parts.

Application of the k-d tree method to geographic data is described in "A file organisation for geographic information systems based on spatial proximity" by Matsuyama et al, Computer Vision, Graphics and image processing 26 303 - 318 (1984). In particular, Matsuyama et al compare the efficiency of the k-d tree method with the quad tree method, and find that the k-d tree method is a far more efficient method both in terms of use of storage space (because the quad tree method typically assigns quads, and thus storage, to regions with no points therein) and in terms of data retrieval (because the search space can be reduced efficiently using the k-d tree method, as described above).

Despite the fact that the k-d tree method is more efficient than the standard quad-tree method, it still assigns storage to more areas than is actually required - as described above, when partitioning a region (creating nodes in the binary tree), the partitioning line is determined such that each resulting part contains the same amount of data; consequently the parts are larger in size than they would need to be, and ultimately the binary tree will have more nodes than are necessary.

OOI, B C et al in Spatial KD-Tree: An Indexing Mechanism for Spatial Database, Proceedings of the Annual International Computer Software and Applications. Conference (COMPSAC), Tokyo, October 7-9 1987, Washington, IEEE Comp. Soc. Press, US, vol. conf. 11, pages 433-438 discloses the use of a so-called spatial kd-tree to facilitate the processing of spatial database queries. The spatial kd-tree partitions a set of records on k-dimensional space into small groups based on their spatial proximity.

According to a first aspect of the present invention there is provided a method of building an index to a plurality of entities having the features defined in claim 1 of the appended set of claims.

Thus in comparison with known indexing methods, the present method firstly "shrinks" the indexing space so that it only indexes over areas that contain points. Thus the storage areas are correspondingly compact, which has advantages in terms of minimising use of storage space.

In fact, referring to the aforementioned paper entitled "A file organisation for geographic information systems based on spatial proximity", Matsuyama et al identify the problem associated with the quad-tree method - namely indexing of empty database pages (see p. 312) - but solve the problem by applying a completely different method to that of the present invention (the k-d tree method).

Advantageously the step of reducing the region involves calculating distances between entities in each of two dimensions; and for each of the dimensions identifying which of the entities has the greatest distance between them, such that when the two dimensions are perpendicular to one another the region created in step ii is a rectangle, defined by at least two points.

The sub-regions can be linked via a so-called "linked list" of points, which is an efficient linking mechanism known in the art.

Preferably the region is divided into four sub-regions, and steps ii and iii are repeated recursively for each of the second areas.

Conveniently the method includes storing the linking data in a database, maintaining a register of number of entities stored in the database, and for each sub region, writing the current register number to the storage area corresponding thereto.

Advantageously entities that have been indexed in accordance with the first aspect of the invention can be retrieved. In particular, and in terms of the points corresponding to the entities, points that are contained by a predetermined area can be retrieved by performing the following steps:
(a) identifying one or more regions that are contained by the predetermined area, each region encompassing one or more points and being associated with linking data which, for each region, identifies the point or points encompassed by that region; and
(b) accessing linking data corresponding to the identified regions so as to retrieve points encompassed by the identified regions.

The regions correspond to the storage areas indexed in accordance with the first aspect of the invention. Thus as the storage areas are compact, in that, as described above, they are "shrink wrapped" around points, the identification of points in the index is an efficient process.

Preferably the identifying step (a) includes the steps of retrieving a region and performing a process in respect of the region, the process comprising the steps of: comparing extents of the region with extents of the predetermined area in order to establish whether the first region overlaps with the predetermined area; and, if there is overlap, retrieving sub-regions of the region, and identifying any such sub-regions whose extents are wholly within the predetermined area. This process can be repeated for each sub-region until all sub-regions thereof falling wholly within the predetermined area are identified.

Conveniently the plurality of points is pre-stored as a list of points in accordance with relationships between respective regions and sub-regions thereof, and the linking data includes a value indicating the position of a first of the corresponding encompassed points in the list of points. The accessing step (b) then comprises, for each of the identified region and sub-regions: retrieving an identifier representative of the number of encompassed points and retrieving a position value associated with the identified sub-region; and accessing the list of points and retrieving the number of encompassed points from a position in the list given by the position value.

Preferably the value involved in the linking data corresponds to the register number written to the storage area.

The method steps are preferably embodied in one or more computer programs, which may be wholly, or in part, embodied as a signal in a carrier wave for transmission over a communications network, and/or in a computer readable medium as a computer program product.

Conveniently the points correspond to data that can be expressed in two dimensions, for example location (longitude and latitude) data or range data. Range data can include business hours (e.g. opening and closing times), price margins (e.g. maximum and minimum prices), and/or medical data (e.g. maximum and minimum blood pressure). Thus a predetermined area could be a range of prices - such as a maximum house prices and a minimum house price. In accordance with the retrieval method described above, the extents of the predetermined area (i.e. price range) are compared with a region retrieved from the index. All regions that:overlap with the price range are then successively retrieved until a region, which falls wholly within the specified price range, is identified. All points falling within this identified region thus represent goods being of a price that falls within the specified maximum and minimum price range.

Further aspects, features and advantages of the present invention will be apparent from the following description of preferred embodiments of the invention, which refers to the accompanying drawings, in which
Figure 1 is a schematic diagram illustrating aspects of a communications system used by the invention;
Figure 2 is a schematic diagram showing an example of points to be indexed according to the invention;
Figure 3 is a schematic diagram showing an expanded view of Figure 2;
Figures 4a & 4b in combination comprise a flow diagram showing an embodiment of an indexing process according to the present invention when indexing the points shown in Figure 2;
Figure 5 is a schematic diagram showing application of the process of Figures 4a & 4b to create a quad around the points shown in Figure 2;
Figure 6 is a schematic diagram showing application of the process of Figures 4a & 4b to create a sub-quad of the quad created according to Figure 5;
Figure 7 is a schematic diagram showing application of the process of Figures 4a & 4b to create a sub-quad of one of the sub-quads of Figure 6;
Figure 8 is an expanded view of Figure 7;
Figure 9 is an expanded view of Figure 8 showing application of the process of Figures 4a & 4b to create another of the sub-quads shown in Figure 7;
Figure 10 is an expanded view of Figure 8 showing application of the process of Figures 4a & 4b to create another of the sub-quads shown in Figure 7;
Figure 11 is a schematic diagram showing application of the process of Figures 4a & 4b to create another sub-quad of one of the sub-quads of Figure 6;
Figure 12 is a schematic diagram illustrating a process of storing points according to the invention;
Figures 13a & 13b in combination comprise a flow diagram showing an embodiment of a retrieving process according to the present invention when retrieving points in accordance with an area of interest;
Figure 14 is a schematic diagram showing an example of an area of interest for which points are to be retrieved;
Figure 15 is a schematic diagram showing application of the process of Figures 13a & 13b to one of the sub-quads of Figure 6;
Figures 16 and 17 are an enlarged view of Figure 15 and are schematic diagrams showing application of the process of Figures 13a & 13b to a first of the sub-quads of Figure 7;
Figure 18 is an enlarged view of Figure 15 and shows the area of interest and a second of the sub-quads of Figure 7;
Figure 19 is a schematic diagram corresponding to Figure 18 showing application of the process of Figures 1 3a & 13b to the second of the sub-quads of Figure 7;
Figures 20a & 20b are schematic diagrams showing application of the process of Figures 13a & 13b to a (first) sub-quad of the sub-quad shown in Figure 18;
Figures 21a & 21b are schematic diagrams showing application of the process of Figures 13a & 13b to another (a second) sub-quad of the sub-quad shown in Figure 18;
Figures 22a & 22b are schematic diagrams showing application of the process of Figures 13a & 13b to another sub-quad (a third) of the sub-quad shown in Figure 18;
Figures 23a & 23b are schematic diagrams showing application of the process of Figures 13a & 13b to another sub-quad (a fourth) of the sub-quad shown in Figure 18;
Figure 24 is an enlarged view of Figure 15 and shows the area of interest and a third of the sub-quads of Figure 7;
Figure 25 is a schematic diagram corresponding to Figure 24 showing application of the process of Figures 13a & 13b to the third of the sub-quads of Figure 7;
Figures 26a & 26b are schematic diagrams showing application of the process of Figures 13a & 13b to a (first) sub-quad of the sub-quad shown in Figure 24;
Figures 27a & 27b are schematic diagrams showing application of the process of Figures 13a & 13b to another (a second) sub-quad of the sub-quad shown in Figure 24;
Figures 28a & 28b are schematic diagrams showing application of the process of Figures 13a & 13b to another sub-quad (a third) of the sub-quad shown in Figure 24;
Figures 29a & 29b are schematic diagrams showing application of the process of Figures 13a & 13b to another sub-quad (a fourth) of the sub-quad shown in Figure 24;
Figure 30 is an enlarged view of Figure 15 and shows the area of interest and a fourth of the sub-quads of Figure 7; and
Figure 31 is a schematic diagram corresponding to Figure 30 showing application of the process of Figures 13a & 13b to the fourth of the sub-quads of Figure 7.
Figure 32 is a flow diagram showing further steps involved in the retrieving process of Figures 13a & 13b; and

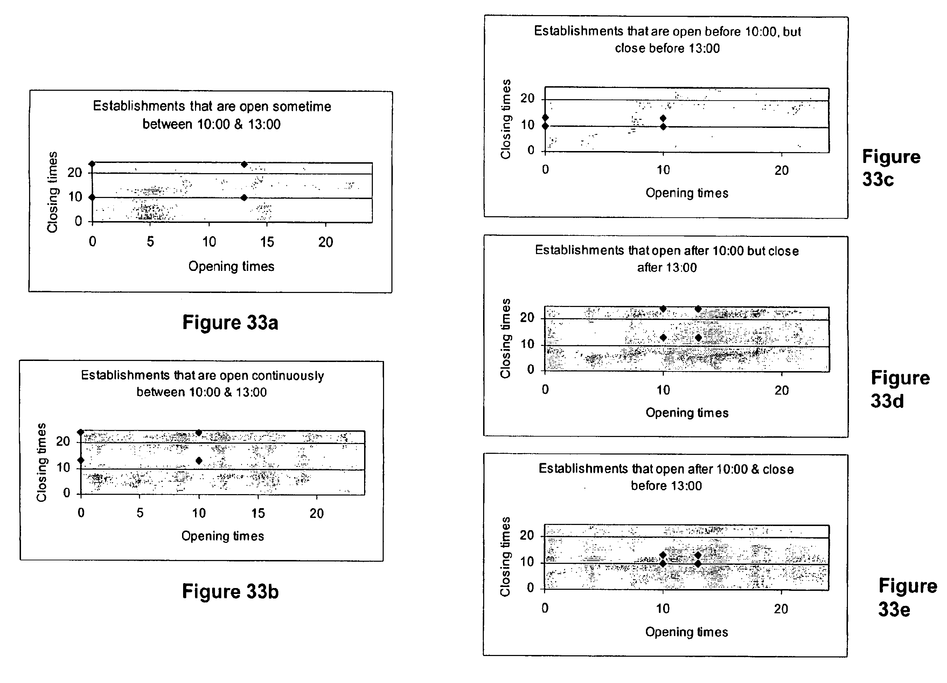

Each of Figures 33a - 33e is a schematic illustration of a region of interest for which points are to be retrieved according to the invention.

### Overview

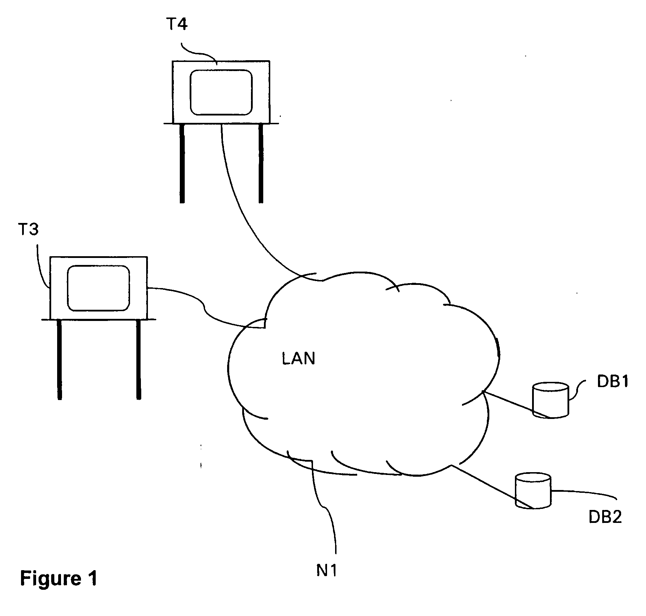

Database servers DB1, DB2, such as those shown in Figure 1, typically store information for retrieval by users. At the physical level, the communications environment within which the database servers DB1, DB2 are located includes at least one user interface, commonly provided by a computer terminal or workstation T3.

Embodiments of the invention can be executed on the workstation T3, which is connected to database servers DB1, DB2. Although the database servers DB1, DB2 are shown on the same LAN N1 as the terminal T3, it is understood that the database servers DB1, DB2 could be connected to different networks, which in turn are connected to LAN N1 via one or more switches and/or routers (not shown). Embodiments receive data as input, for instance as a file, and build an index to the data, as is described in more detail below. The built index is then saved in one of the databases DB1, DB2, and the indexed data is also saved, in an order given by the structure of the built index, to one of the databases DB1, DB2. The built index can be saved on the same, or a different, database as the database on which the data is stored.

Embodiments of the present invention are concerned with indexing entities that are defined by 2-dimensions. Obvious examples of entities that can be indexed according to embodiments include the location of objects, such as petrol stations, cash points etc., as the position of objects is commonly defined in terms of latitude and longitude. Many other entities can be represented by 2-dimensions - e.g. acceleration of a motorbike as a function of time and speed, conductivity of a material as a function of material properties and temperature, deformation of an object as a function of material properties and force applied to the object etc. Furthermore, transformations can be applied to n-dimensional parameters to reduce them to 2-dimensional parameters, which can be displayed in a 2-dimensional space.

A further example of entities that can be indexed using embodiments of the present invention include range information, e.g. temporal information, price information, and medical condition information.

An example of temporal range information is opening and closing times of business and leisure establishments - these times can be expressed in two dimensions, with, for example, the closing and opening times respectively on the ordinate and abscissa axes. Similarly, delivery times (earliest and latest) can be expressed in two dimensions.

An example of price information includes prices of goods, so that, for example, maximum and minimum prices of goods can be respectively expressed on one of two dimensions, and so indexed using embodiments of the invention. Price information also includes trading information, as used to buy and sell stocks, shares, bonds etc.

An example of medical condition information includes statistics relating to measurable conditions such as body temperature and blood pressure, and conditions that can be translated into numerical representations, such as cancer sites.

In the following description, entities are generally referred to as "points" in order to disassociate the context of the entities (e.g. petrol station, cash point etc.) from the mechanics of the embodiment.

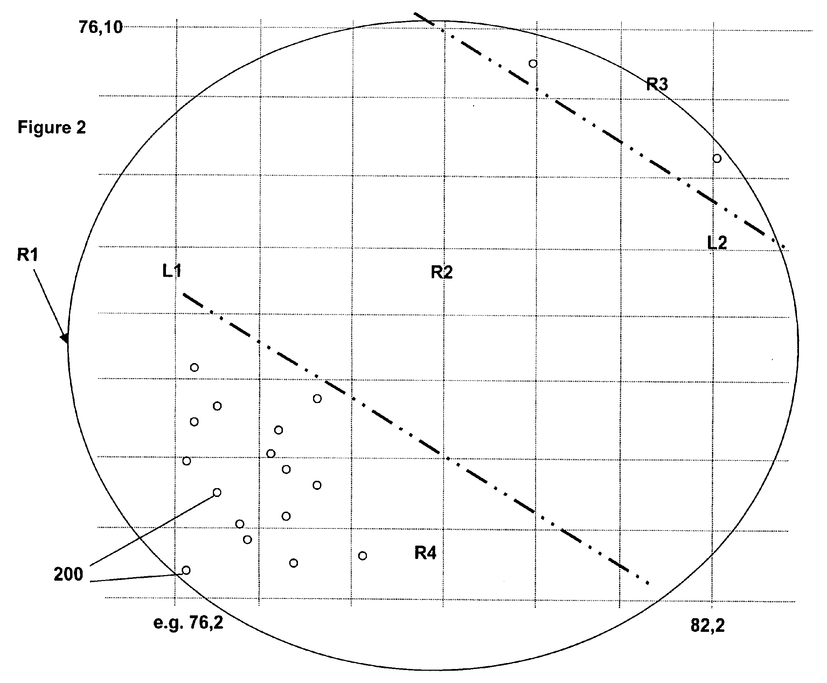

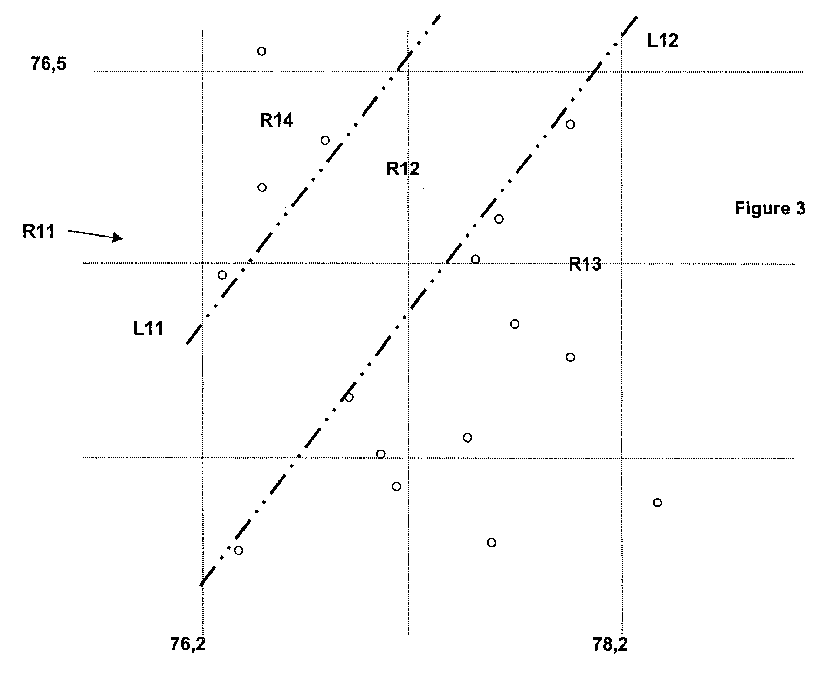

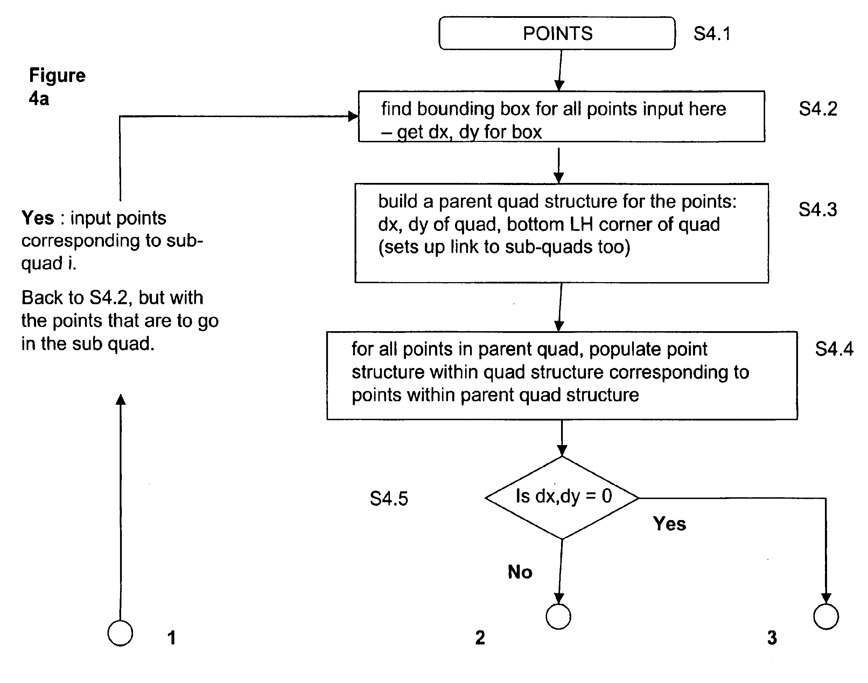

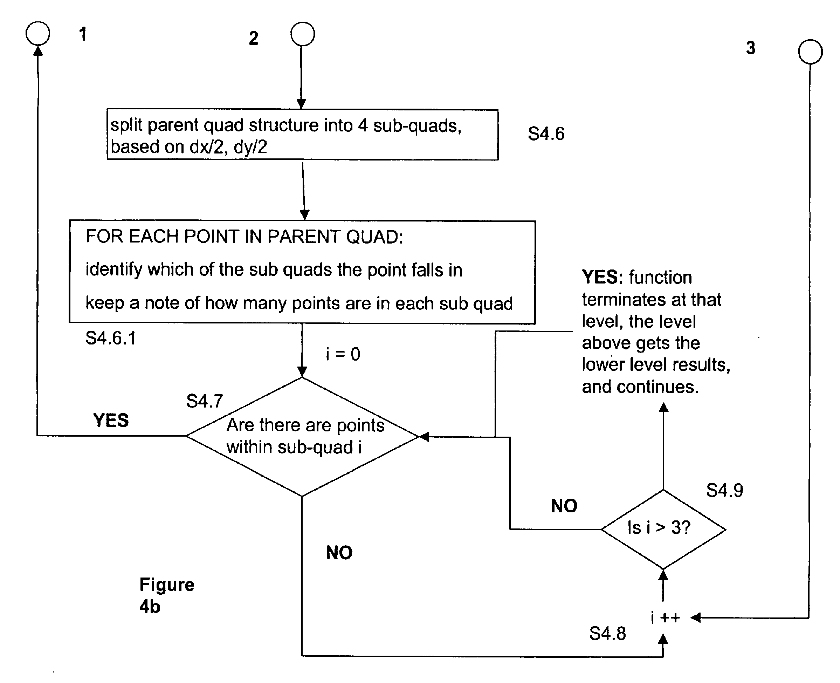

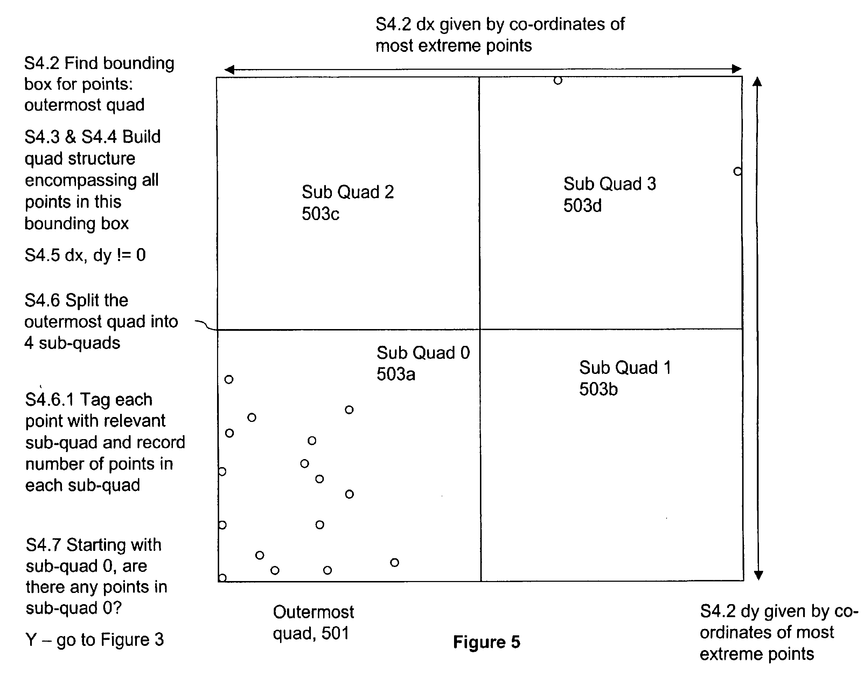

In overview, an embodiment of a method of indexing points is described with reference to Figure 2. Figure 2 shows an area R1 within which a plurality of points 200 is located. Each of the points is defined in x,y co-ordinate space. Essentially the area R1 comprising points to be indexed is examined and split into areas R3, R4 containing points and area R2 not containing points (the areas could be split into any shape, such as a rectangle, triangle, or strips; Figure 2 shows the areas split into strips for the purposes of describing the inventive concept of this invention). The embodiment then examines the distribution of points in areas R3 and R4, identifying on a smaller scale than was considered for region R1, areas in R3 and R4 that comprise points. Referring to Figure 3, R4 essentially becomes R11 and the distribution of points within R11 is examined. By concentrating on the distribution of points in this way, areas that do not contain any points, Region R2 in Figure 2 and region R12 in Figure 3 are implicitly discarded. The process is continually repeated, effectively "burrowing down" through a series of areas of diminishing size, until the size of an area is such that it collapses to the size of a single point. As the embodiment "burrows down", each area is linked to the area above it, such that each point is linked by a series of areas. An index to these points comprises the series of areas, and these areas and points are used to create an index (described in more detail below) that is saved in database DB1. The relationship between the points and areas enables points to be identified by identification of an area in the index.

One of the advantages of creating an index as described above is that the query search domain is confined to areas that are known to contain points - i.e. queries will only be carried out on the areas saved in the database DB1, and as these areas by definition include points, the search domain is relatively compact. Referring back to Figure 2, the process of identifying points in respect of a query is faster according to the embodiment described above, than if the index comprised information relating to the whole of area R1.

In a particular form of an embodiment, presented below with reference to Figures 4-11, points are 2-dimensional co-ordinates in x, y space. If the entities to be indexed are acceleration values, defined by a corresponding set of time and speed values, the time and speed values map directly onto an x,y co-ordinate space, so that (t1, v1), (t2, v2).....(tn, vn) are co-ordinates of points corresponding to the acceleration values. Similarly, if the entities to be indexed are location values, defined by a corresponding set of latitude and longitude values, the latitude and longitude values map directly onto an x, y co-ordinate space, such that (lat_1, long_1) ... (lat_n, long_n) are co-ordinates of points corresponding to location values. It is assumed that the points have been stored (e.g. written to a file), so that embodiments of the invention read the points in from a file. In alternative embodiments a user may input the points when the index to those points is about to be built.

Furthermore, in the embodiment presented below, the areas are squares, referred to as "quads" and "sub-quads" in the description below, and each quad is successively split into four sub-quads. Each sub-quad is examined for the existence of points. Those with no points are discarded, which is an equivalent process to discarding the area R2 described with reference to Figures 2 and 3 above, and each new sub-quad containing points is "shrunk wrapped" around the smallest area that contains points in that sub-quad. (The embodiment analyses the areas in accordance with squares, but many other shapes could be used to "shrink-wrap" around the points). Each sub-quad is then divided again into four sub-quads, empty sub-quads are again discarded and each remaining sub-quad "shrunk-wrapped" about its smallest area containing points. Eventually, each remaining sub-quad will have been "shrunk-wrapped" onto a single point and its co-ordinates will be those of the point concerned. Once the quad and all the sub-quads, including both the intervening sub quads which haven't been discarded and the sub-quads coinciding with single points, have been identified, an index to the points, comprising the quad and sub quads relevant to each one, is created. This is described in detail after the discussion of Figures 5-10.

In the following, steps S 4.1 through to S 4.9 are shown in sequence in the flow chart of Figures 4a and 4b and illustrated by the operations with the same reference numerals as shown in Figures 5-11.

### Figure 5

- Step S4.1 Read in x, y co-ordinates of all points to be indexed (as stated above, the points may be read from either a storage location, such as a file, or directly from a user);
- Step S4.2 Draw up a bounding box for all points, identifying, and "shrink-wrapping" around, the co-ordinates of the outermost points (the bounding box is given by the difference between the co-ordinates of the outermost points in both the x and y dimensions: dx and dy respectively). This bounding box is the outermost quad 501;
- Step S4.3 & Step S4.4 Save extents of quad 501 - i.e. dx, dy - and the coordinates of the points in it;
- Step S4.5 Check whether the outermost quad 501 has positive size (i.e. are dx, dy of quad 501 equal to zero?) In the example shown in Figure 5, there is an outermost quad 501, because the quad has multiple points in it, dx, dy are non-zero, and thus quad 501 has positive size;
- Step S4.6 Split the outermost quad 501 into four sub-quads, 503a, 503b, 503c, 503d;
- Step S4.6.1 Tag each point with its relevant sub-quad and record the number of points in each sub-quad;
- Step S4.7 Starting with sub-quad 0 (503a) check whether there are any points in the sub-quad 503a.

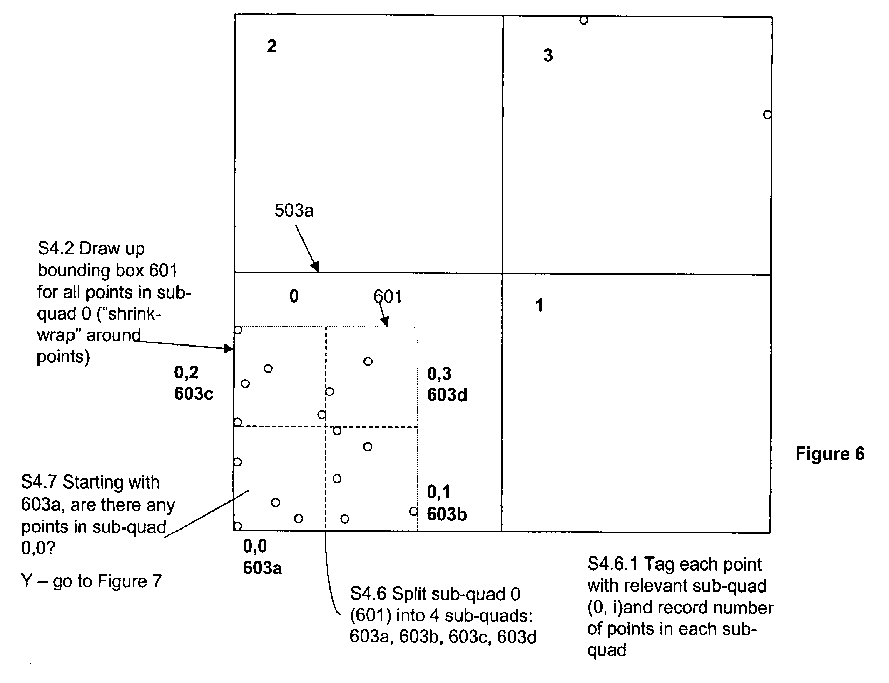

As there are points, input the points within this sub-quad 0 (503a) to Step S4.1 and run through steps Step S4.1 onwards for sub-quad 0 (503a), as described below with reference to Figure 6.

### Figure 6

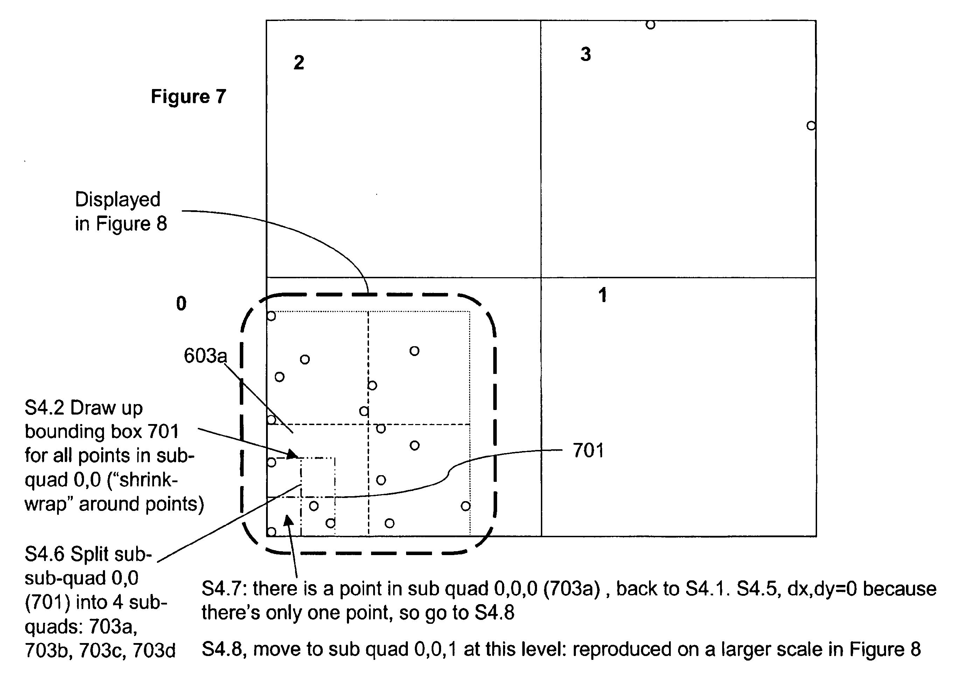

- Step S4.1 Read in x, y co-ordinates of points corresponding to sub-quad 503a;
- Step S4.2 Draw up bounding box for all points in 503a, creating "shrink-wrapped" sub-quad 0 601. This illustrates the principle described above - the embodiment identifies an area within sub-quad 0 where there are no points, and this area is then discarded;
- Step S4.3 & Step S4.4 Save extents of sub-quad 0 (601) - i.e. dx, dy - and the co-ordinates of points in it;
- Step S4.5 Check whether sub-quad 601 has positive size? (i.e. are dx, dy of quad 601 equal to zero?) As can be seen in Figure 6, quad 601 has multiple points in it, dx, dy for quad 601 are non-zero, and thus sub-quad 601 has positive size;
- Step S4.6 Split sub-quad 0 601 into 4 sub-quads: 0,0 (603a), 0,1 (603b), 0,2 (603c), 0,3 (603d)
- Step S4.6.1 Tag each point with its relevant sub-quad and record the number of points in each sub-quad;
- Step S4.7 Starting with sub-quad 0,0 (603a) Check whether there are any points in the sub-quad 0,0 (603a): As there are points, input the points within this sub-quad 0,0 (603a) to Step S4.1 and run through steps Step S4.1 onwards for sub-quad 0,0 (603a), as described below with reference to Figure 7.

### Figure 7

- Step S4.1 Read in x, y co-ordinates of points corresponding to sub-quad 603a;
- Step S4.2 Draw up bounding box for all points in sub-quad 0,0 (603a), creating "shrink-wrapped" sub-quad 0,0 701. As for sub-quad 0, the area without points within sub-quad 603a is ignored;
- Step S4.3 & Step S4.4 Save extents of sub-quad 0, 0 (701) - i.e. dx, dy - and the co-ordinates of points in it;
- Step S4.5 Check whether sub-quad 701 has positive size? (i.e. are dx, dy of quad 701 equal to zero?) As can be seen in Figure 7, quad 701 has multiple points in it, dx, dy for quad 701 are non-zero, and this sub-quad 701 has positive size;
- Step S4.6 Split sub-quad 0,0 701 into 4 sub-quads: 0,0,0 (703a), 0,0,1 (703b), 0,0,2 (703c), 0,0,3 (703d)
- Step S4.6.1 Tag each point with its relevant sub-quad and record the number of points in each sub-quad;
- Step S4.7 Starting with sub-quad 0,0,0 (703a) check whether there are any points in the sub-quad 0,0,0 (703a): there is one point in sub-quad 0,0,0 (703a) so input the points within this sub-quad 0,0,0 to Step S4.1 and run through steps Step S4.1 onwards for sub-quad 0,0,0 (703a), as described below with further reference to Figure 7.

### Also Figure 7

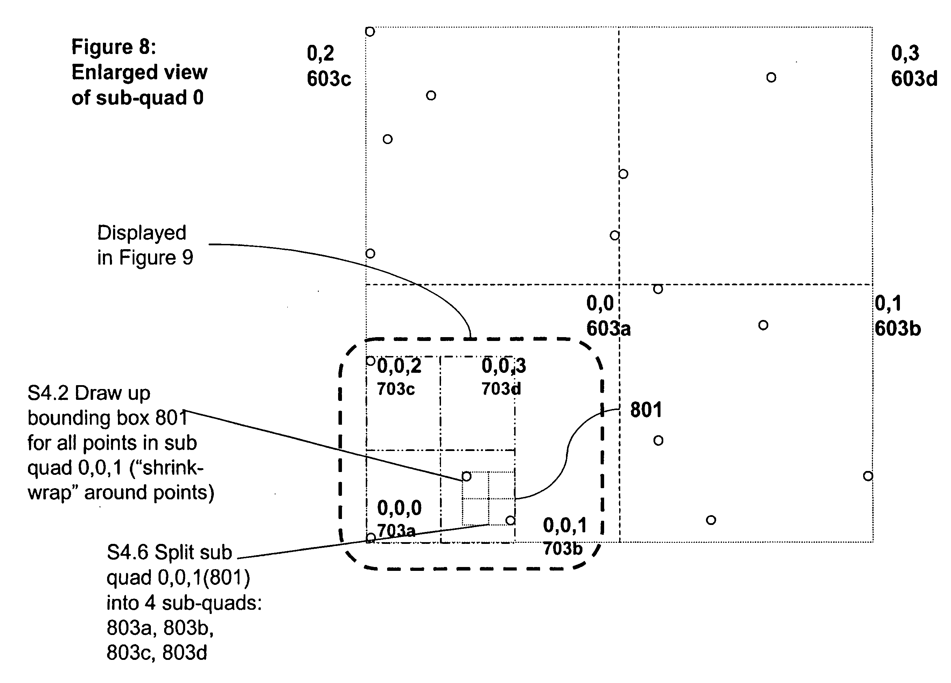

- Step S4.1 Read in x, y co-ordinates of points corresponding to sub-quad 703a;
- Step S4.2 Draw up bounding box for all points in sub-quad 0,0,0 (703a), creating "shrink-wrapped" sub-quad 0,0,0: here around a single point;
- Step S4.3 & Step S4.4 Save the extents of the "shrink-wrapped" sub-quad 0,0,0, which is now down to a single point such that dx, dy = 0, and save the co-ordinates of the point;
- Step S4.5 Check whether sub-quad the point has positive size? (i.e. are dx, dy of the point equal to zero?) In fact dx and dy are both zero because the sub-quad 703a collapsed into a single point. So onto Step S4.8;
- Step S4.8 Increment the sub-quad counter i at this level (0,0,i), input the points (Step S4.7) within sub-quad 0,0,1 (703b) to Step S4.1 and run through steps Step S4.1 onwards for sub-quad 0,0,1 (703b), as described below with reference to Figure 8.

### Figure 8

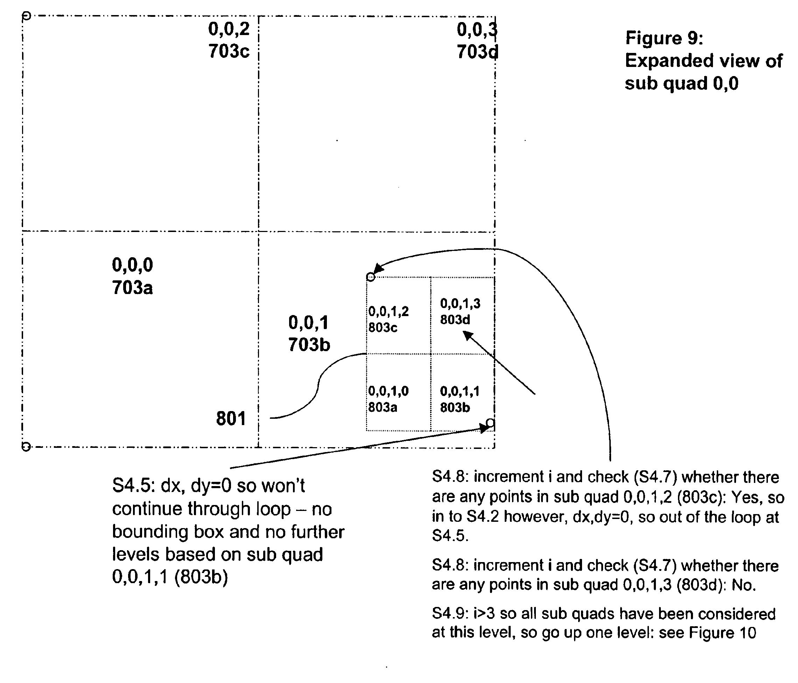

- Step S4.1 Read in x, y co-ordinates of points corresponding to sub-quad 703b;
- Step S4.2 Draw up bounding box for all points in sub-quad 0,0,1 (703b) creating "shrink-wrapped" sub-quad 0,0,1 801. As for sub-quad 0, the area without points within sub-quad 703b is ignored;
- Step S4.3 & Step S4.4 Save extents of sub-quad 801 - i.e. dx, dy - and the coordinates of points in it;
- Step S4.5 Check whether sub-quad 801 has positive size? (i.e. are dx, dy of quad 703a equal to zero?). Sub-quad 801 has multiple points in it, dx, dy for quad 801 are non-zero, and thus sub-quad 801 does have positive size;
- Step S4.6 Split sub-quad 0,0,1 801 into 4 sub-quads: 0,0,1,0 (803a), 0,0,1,1 (803b), 0,0,1,2 (803c), 0,0,1,3 (803d)
- Step S4.6.1 Tag each point with its relevant sub-quad and record the number of points in each sub-quad;
- Step S4.7 Starting with sub-quad 0,0,1,0 (803a) Check whether there are any points in the sub-quad 0,0,1,0 (803a): There are no points in sub-quad 0,0,1,0 (803a);
- Step S4.8 Increment the sub-quad counter i at this level (0,0,1,i) and input the points (Step S4.7) within sub-quad 0,0,1,1 (803b) to Step S4.1 and run through steps Step S4.1 onwards for sub-quad 0,0,1,1 (803b), as described below with reference to Figure 9.

### Figure 9

- Step S4.1 Read in x, y co-ordinates of points corresponding to sub-quad 803b;
- Step S4.2 Draw up bounding box for all points in sub-quad 0,0,1,1 (803b), creating "shrink-wrapped" sub-quad 0,0,1,1, which is a single point;
- Step S4.3 & Step S4.4 Save extents of the single point - i.e. dx, dy - and the co-ordinates of the point;
- Step S4.5 Check whether the point has positive size? (i.e. are dx, dy of the point equal to zero?) In fact dx and dy are both zero because the sub-quad 803b collapsed into a single point. So onto Step S4.8;
- Step S4.8 Increment the sub-quad counter i at this level (0,0,1,i) and input the points within sub-quad 0,0,1,2 (803b) to Step S4.1 and run through steps Step S4.1 onwards for sub-quad 0,0,1,2 (803b), as described with further reference to Figure 9

### Also Figure 9

- Step S4.1 Read in x, y co-ordinates of points corresponding to sub-quad 803c;
- Step S4.2 Draw up bounding box for all points in sub-quad 0,0,1,2 (803c), creating "shrink-wrapped" sub-quad 0,0,1,2, which is a single point;
- Step S4.3 & Step S4.4 Save extents of the single point - i.e. dx, dy - and the co-ordinates of the point;
- Step S4.5 Check whether the point has positive size? (i.e. are dx, dy of the point equal to zero?) In fact dx and dy are both zero because the sub-quad 803c collapsed into a single point. So onto Step S4.8;
- Step S4.8 Increment the sub-quad counter i at this level (0,0,1,i). There are no points (Step S4.7) within sub-quad 0,0,1,3 (803d), so back to Step S4.8: increment the sub-quad counter i at this level (0,0,1,i): but i>3 so
- Step S4.9 Return to sub-quad level 0,0,i and increment the sub-quad counter from 1 to 2, and thus consider sub-quad 0,0,2 (703c): There is a point in sub-quad 0,0,2 (703c) so input the points (Step S4.7) within sub-quad 0,0,2 (703c) to Step S4.1 and run through steps Step S4.1 onwards for sub-quad 0,0,2 (703c), as described with reference to Figure 10.

### Figure 10

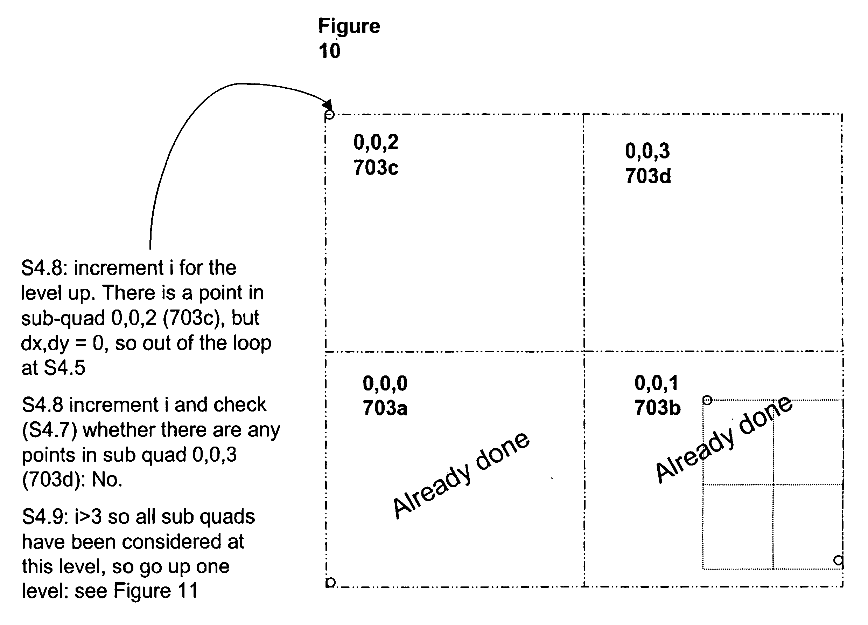

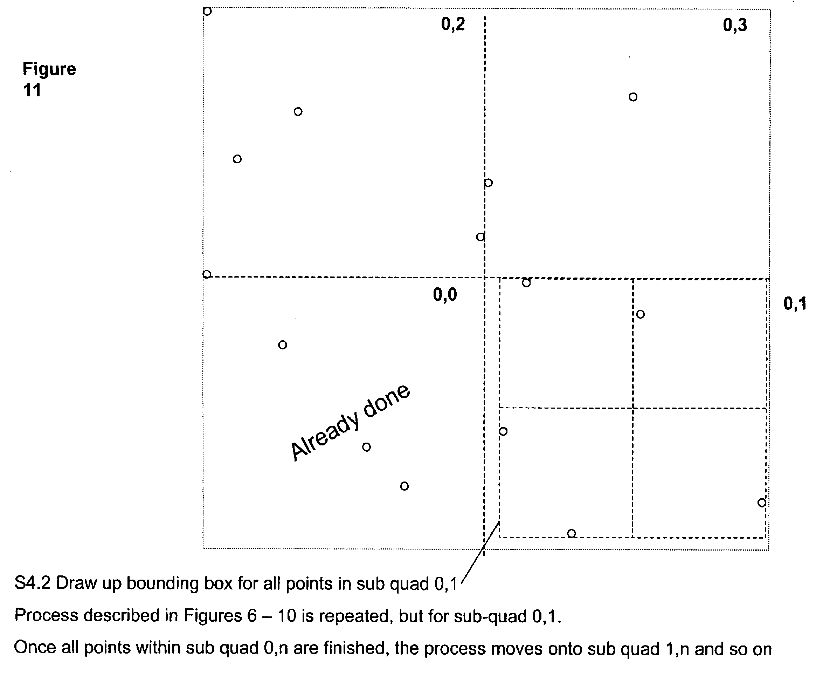

- Step S4.1 Read in x, y co-ordinates of points corresponding to sub-quad 703c;
- Step S4.2 Draw up bounding box for all points in sub-quad 0,0,2 (703c), creating "shrink-wrapped" sub-quad 0,0,2, which is a single point;
- Step S4.3 & Step S4.4 Save extents of the single point - i.e. dx, dy - and the co-ordinates of the point;
- Step S4.5 Check whether the point has positive size? (i.e. are dx, dy of the point equal to zero?) In fact dx and dy are both zero because the sub-quad 703c collapsed into a single point. So onto Step S4.8;
- Step S4.8 Increment the sub-quad counter i at this level (0,0, i). There are no points (Step S4.7) within sub-quad 0,0,3 (703d), so back to Step S4.8: increment the sub-quad counter i at this level (0,0,i): but i>3 so
- Step S4.9 Return to sub-quad level 0, i and increment the sub-quad counter i from 0 to 1, and thus consider sub-quad 0,1 (603b), as described with reference to Figure 11.

### Figure 11

The process described in Figures 6 - 10 is repeated, but for sub-quad 0,1, and once all of the points within sub-quad O,n have been assigned to sub-quads, the process moves onto sub-quad 1.

As described earlier, building an index to these points is then a matter of saving the sub-quad information. This can be engineered in many ways, but preferably the index comprises sub-quad information saved at steps S 4.3 and S 4.4, namely the extents of sub-quad (in x, y co-ordinates) and co-ordinates of points falling therein, and a link to the 4 sub-quadrants within the sub-quad. Thus the index essentially comprises a hierarchy of sub-quad structures where the hierarchy is given by the relationship between each successive sub-quad and its 4 sub-quads. The sub-quads are written to the index in accordance with the sub-quad hierarchy, from the largest sub-quad (here 501 on Figure 5), down to the smallest sub-quad.

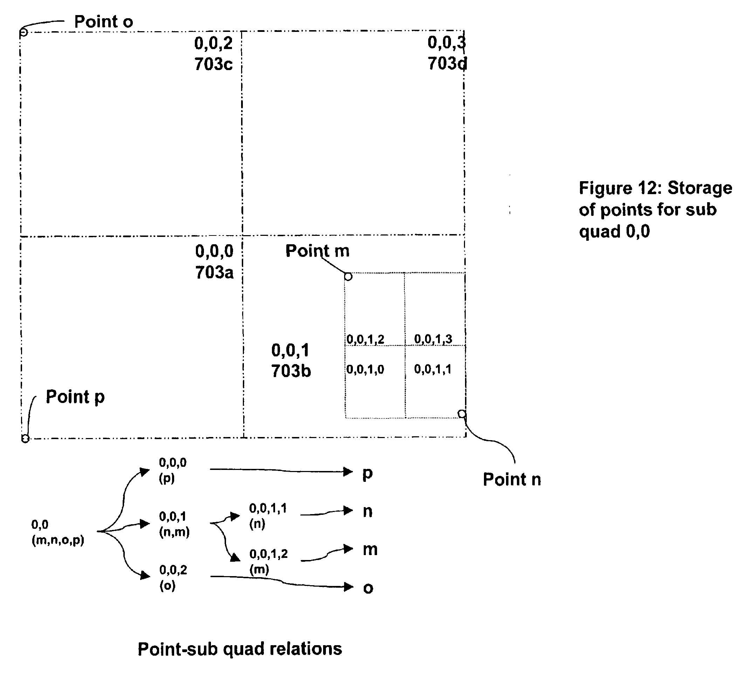

In addition to saving the sub-quad structures in the database DB1, the points are written to the database (either the same database or a different database), e.g. in a file, in an order given by the inverse of the sub-quad hierarchy. Thus in this case, points in the sub-quads at the bottom of the hierarchy are written to the file first. As the points are written to a file, a running tally of the total number of points (register of number of points) is maintained, such that as each point is written to the file, a counter representing:
curren⁺ number of points encountered so far + 1
is written to the respective sub-quad structure. The tally works from the smallest sub-quad up, and, for each sub-quad, essentially indicates the position of the first of all points in that sub-quad in terms of all of the points being indexed (Pos sub_quad). e.g. Referring to Figure 12,

| Sub- quad | Points in sub-quad (N) | Number of first point written to sub-quad (Pos _{sub_quad}) | Highlighted point in points file |
|---|---|---|---|
| 0,0,1,1 | n (N=1) | 1 | **n**,m,p,o ..... |
| 0,0,1,2 | m (N=1) | 2 | n**,m**,p,o ..... |
| 0,0,0 | p(N=1) | 3 | n,m**,p**,o ..... |
| 0,0,1 | n, m (N=2) | 1 | **n**,m,p,o ..... |
| 0,0,2 | o (N=1) | 4 | n,m,p,o ..... |
| 0,0 | n,m,p,o (N=4) | 1 | **n**,m,p,o ..... |
| 0,1,c,d | some points | 5 | n,m,p,o, Next..... |

Thus points file for sub-quad 501 (the outermost quad, see Figure 5) reads n,m,p,o...... (starting from the smallest sub-quad 0,0,1,1). As both the number of points, (N) and the number in the running tally of points (Pos _{sub_quad}) corresponding to the first point in a sub-quad, are written to the sub-quad, then once a sub-quad of interest has been identified, the points that lie within the identified sub-quad can be extracted by moving to Pos _{sub_quad} in the points file and extracting N points from that position. This is demonstrated in an embodiment demonstrating retrieval of points.

### Retrieval of information

The second invention relates to a method of retrieving entities by means of an index of elements related to the entities, when the relationship between each element and other elements in the index, and the relationship between elements in the index and the entities being indexed, is known. The method is readily applicable to an index created in accordance with the method of indexing presented above, because the index comprises a hierarchy of sub-quad structures, and the hierarchy is well defined (by quad->sub-quad relationships). However, it should be borne in mind that the method is equally applicable to any type of index that satisfies these conditions.

In the following description, an embodiment of the retrieval process is described, where an index to points is queried with a query specifying a "region of interest". It is assumed that:
- the elements in the index are a plurality of areas within a predetermined area,
- the entities being indexed are points defined by two dimensions;
- there is a predetermined relationship between the areas; and
- there is a predetermined relationship between the areas and the points. Essentially the embodiment identifies which of the areas
   a) overlaps with the region of interest, and
   b) contains points within those areas that overlap with the region of interest.
The predetermined relationship between areas and the points is then used to extract points falling within the identified areas.

A region of interest refers to a region within the two dimensional representation of the entity. Thus for the temporal range described above (closing and opening times of business and leisure establishments), a region of interest would be a time period of interest - such as "shops open between 10:00 and 13:00 hours". The region of interest would then be defined by a region (preferably a square) bounded within prespecified points. Referring to Figure 33a - e, the region of interest could be any one of:
(0,10), (13,24) ≡ establishments that are open *sometime* between 10:00 & 13:00 (Figure 33a)
( 0,13), (10,24) ≡ establishments that are open *continuously* between 10:00 & 13:00 (Figure 33b)
( 0,10), (10,13) ≡ establishments that are open before 10:00, but close before 13:00 (Figure 33c)
(10,13), (13,24) ≡ establishments that open after 10:00 but close after 13:00 (Figure 33d)
(10,10), (13,13) ≡ establishments that open after 10:00 & close before 13:00 (Figure 33e)

Similarly, for the pricing range described above, a region of interest would be a range of prices, so that, for a retrieval requirement of "all items that fall somewhere in the range of £50.00 and £80.00", the region of interest could be defined by a region bounded within the points (0,50) and (80, 80).

For the location information described above, a region of interest would be a range of positions, such as "all items located between a first position ((lat, long)₁) and a second position ((lat, long)₂)".

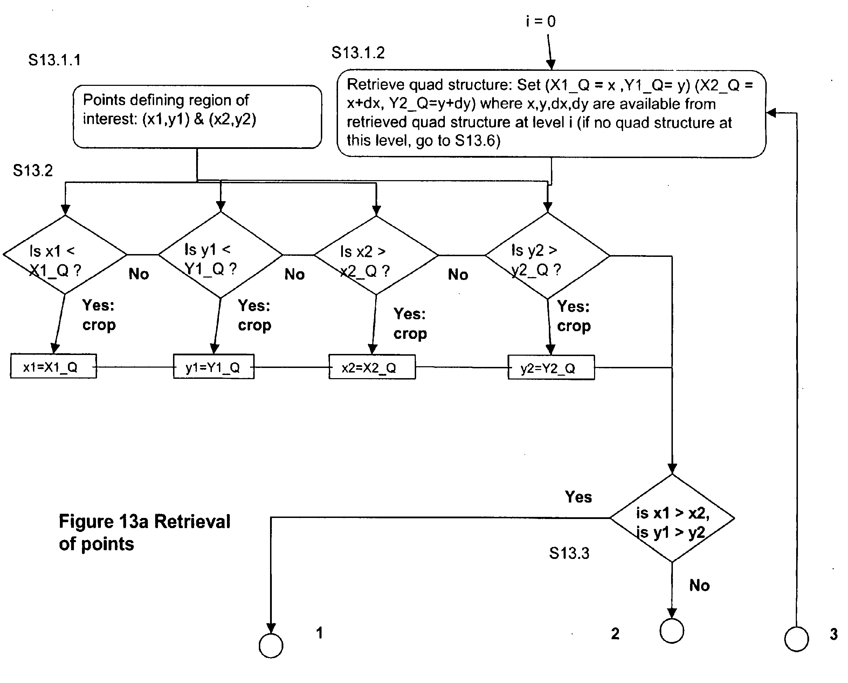

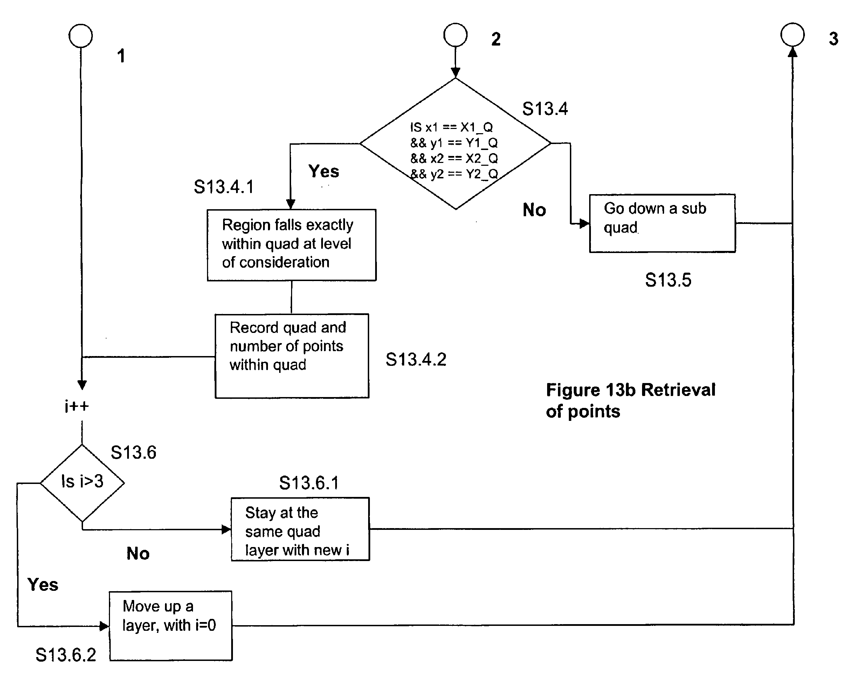

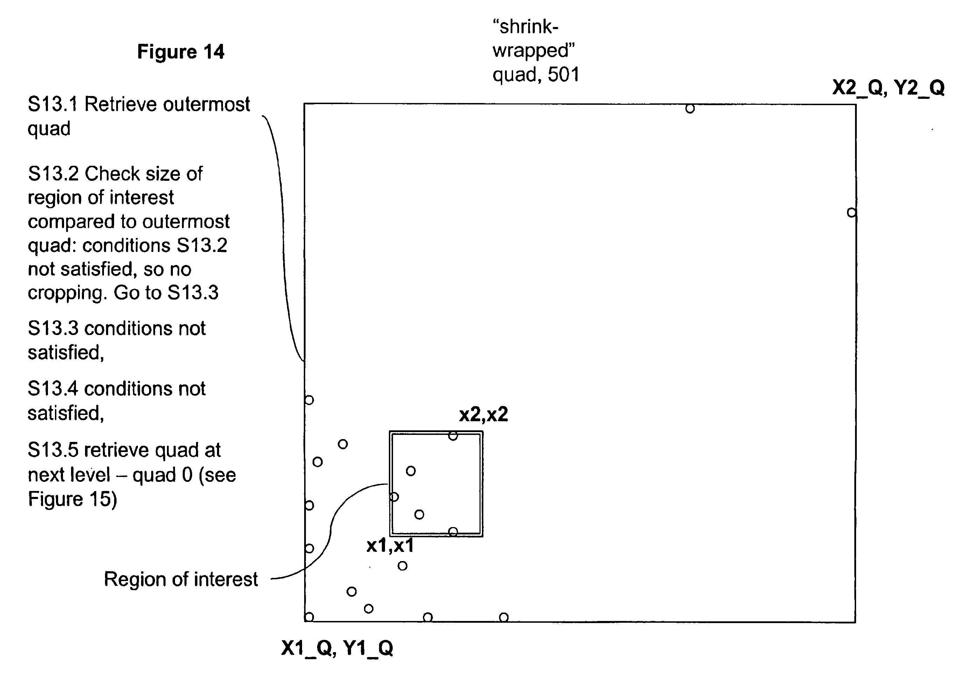

A flow diagram showing steps of a method of identifying areas that overlap with the region of interest, when the region of interest relates to location information, is shown in Figures 13a and 13b. The steps are then illustrated, for the region of interest shown in Figure 14, in Figures 14 - 31. In this embodiment, specific examples of areas within a predetermined region are referred to as quads and sub-quads. The method steps shown in Figure 13 are described below with reference to each of Figures 14-31.

### Figure 14

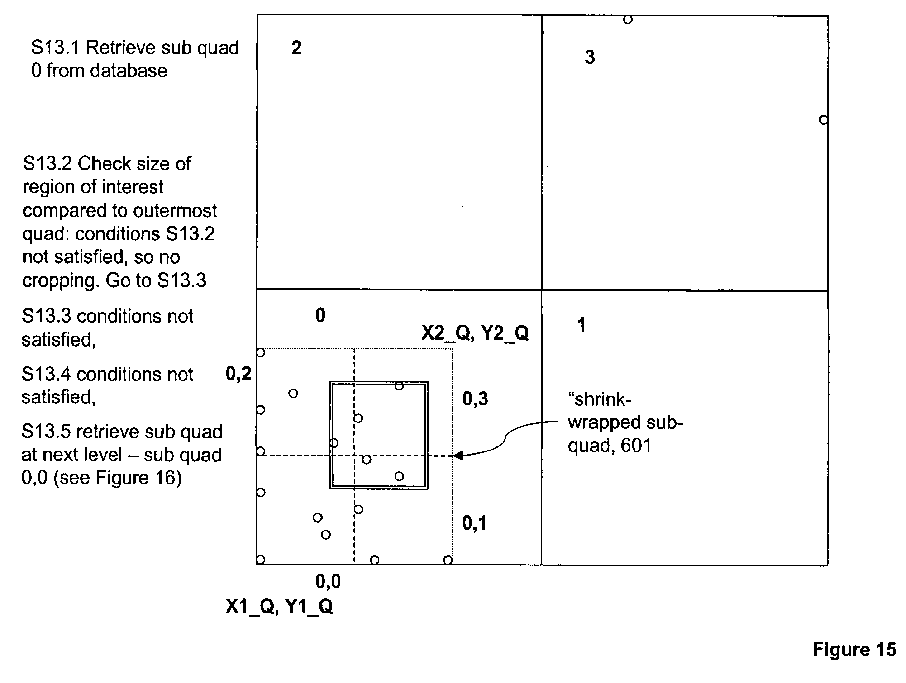

- S13.1.1 Read in x, y co-ordinates of a region of interest (x1,y1) (x2,y2). As an example, if a user wants to locate garages in a certain area, these might be indexed as latitude/longitude pairs defining points in a two-dimensional space and the geographical area that the user is interested in can be expressed as a "region of interest" in the two-dimensional space;
- S13.1.2 Retrieve co-ordinates of points and size of quad for the outermost quad and set (X1_Q, Y1_Q) (X2_Q, Y2_Q) to size of outermost quad;
- S13.2 Assess whether the region of interest requires cropping: if x1 <X1_Q set x1 =X1_Q; if y1 <Y1_Q set y1 =Y1_Q; if x2>X2_Q set x2=X2_Q; if y2>Y2_Q set y2=Y2_Q. For the example region of interest shown in Figure 14, none of these conditions are satisfied;
- S13.3 Assess whether x1>x2 or y1>y2. In this case neither conditions are satisfied;
Steps S13.2 and S13.3 are only one example of conditions that can be applied to establish whether the sub quad retrieved at S13.1.2 overlaps with the region of interest, and whether, if there is overlap, there are any points within the overlapping region; it is envisaged that alternative methods could be applied to establish this.
- S13.4 Assess whether the region of interest overlaps *exactly* with the quad. No:
- S13.5 Retrieve a sub-quad (503a) of the present quad (501) in accordance with S13.1.2, as is described with reference to Figure 15

### Figure 15

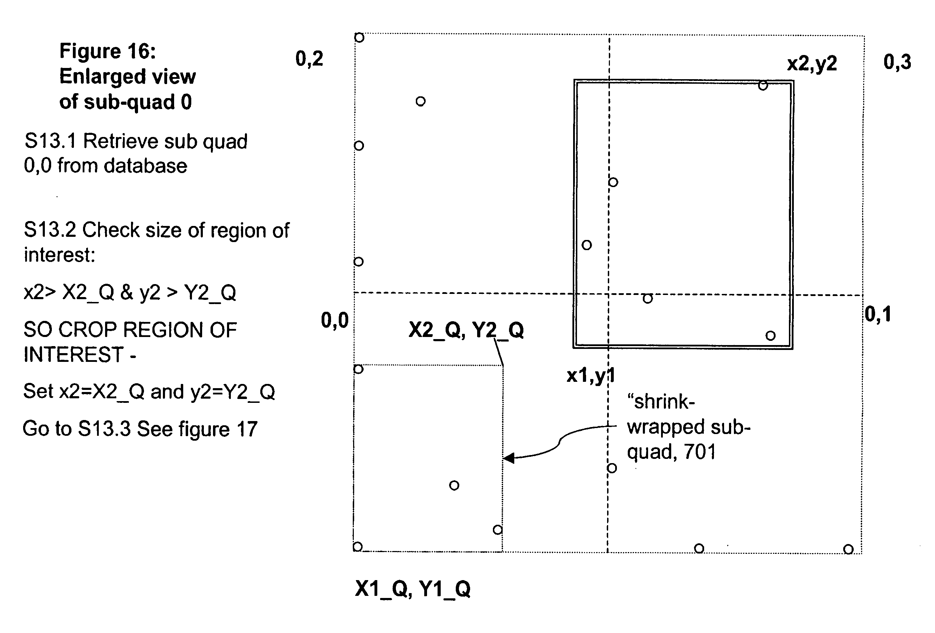

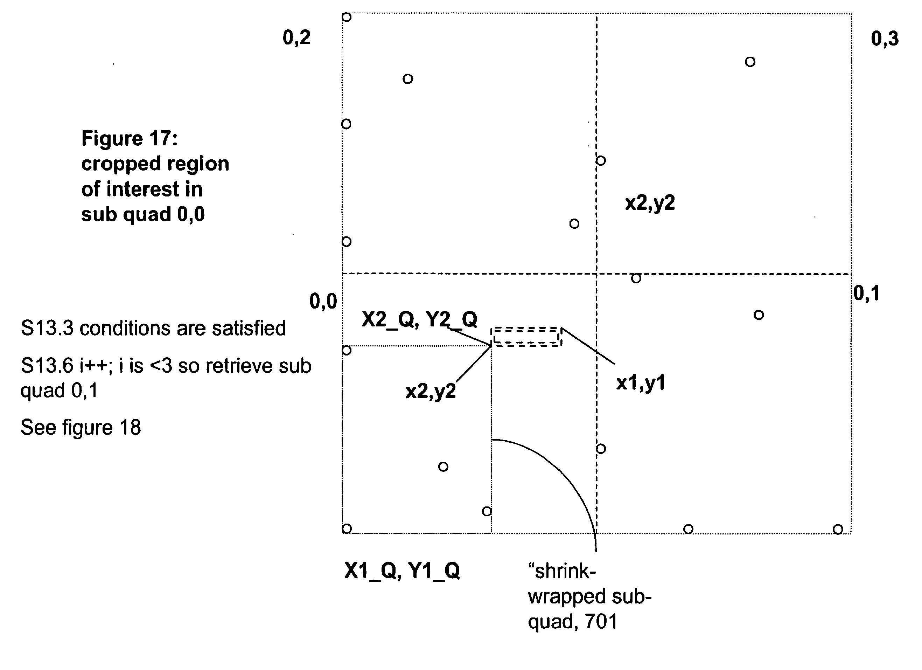

- S13.1.2 Retrieve co-ordinates of points and size of sub-quad from "shrink-wrapped" sub-quad 0 601: set (X1_Q, Y1_Q) (X2_Q, Y2_Q) to size of "shrink-wrapped" sub-quad 601;
- S13.2 Assess whether the region of interest requires cropping: if x1<X1_Q set x1 =X1_Q; if y1 <Y1_Q set y1 =Y1_Q; if x2>X2_Q set x2=X2_Q; if y2>Y2_Q set y2=Y2_Q. In this case none of these conditions are satisfied;
- S13.3 Assess whether x1>x2 or y1>y2. In this case neither conditions are satisfied;
- S13.4 Assess whether the region of interest overlaps *exactly* with the sub-quad. No:
- S13.5 Retrieve a sub-quad of the present sub-quad in accordance with S13.1.2, as is described with reference to Figures 16 and 17

### Figures 16 & 17

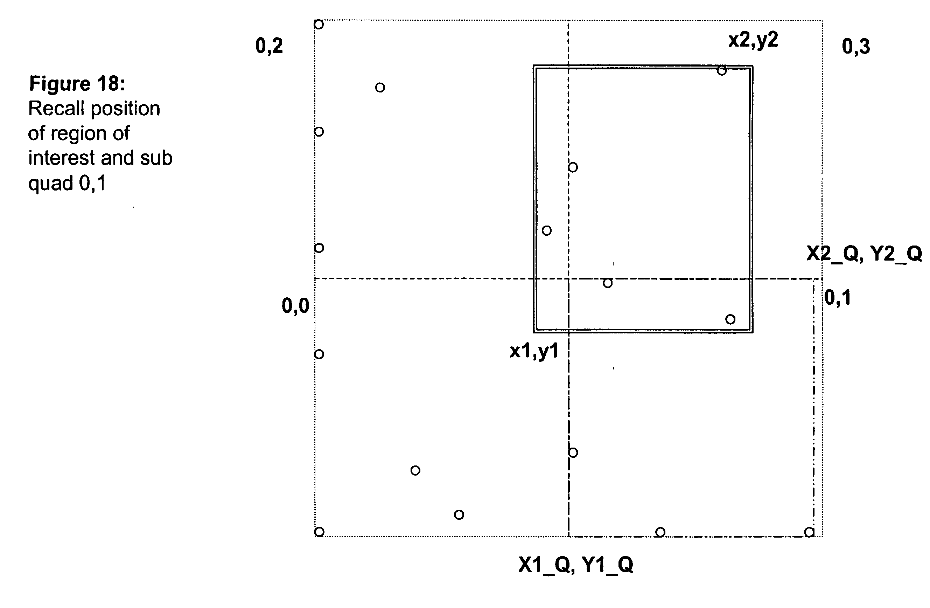

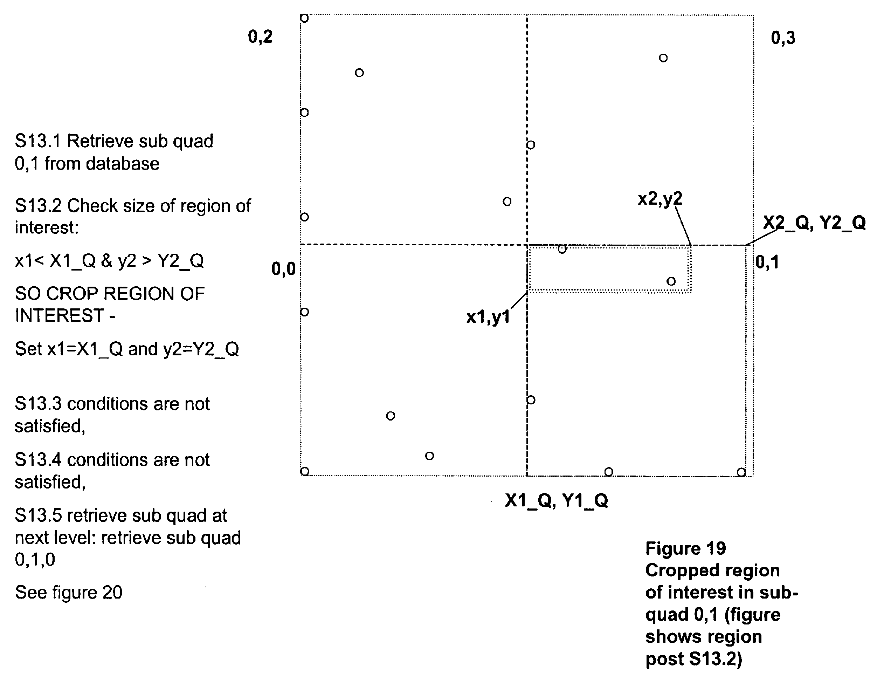

- S13.1.2 Retrieve co-ordinates of points and size of sub-quad from "shrink-wrapped" sub-quad 0,0 701: set (X1_Q, Y1_Q) (X2_Q, Y2_Q) to size of "shrink-wrapped" sub-quad 701;
- S13.2 Assess whether the region of interest requires cropping: x2>X2_Q so set x2=X2_Q and y2>Y2_Q so set y2=Y2_Q;
- S13.3 Assess whether x1>x2 or y1>y2. In this case (Figure 17) both conditions are satisfied, which means that there are no points in sub-quad 0,0 (701) that fall within the region of interest;
- S13.6 Increment sub-quad counter i at this level (0,i), and retrieve sub-quad (0,1) in accordance with S13.1.2, as described with reference to Figures 18 and 19.

### Figures 18 & 19

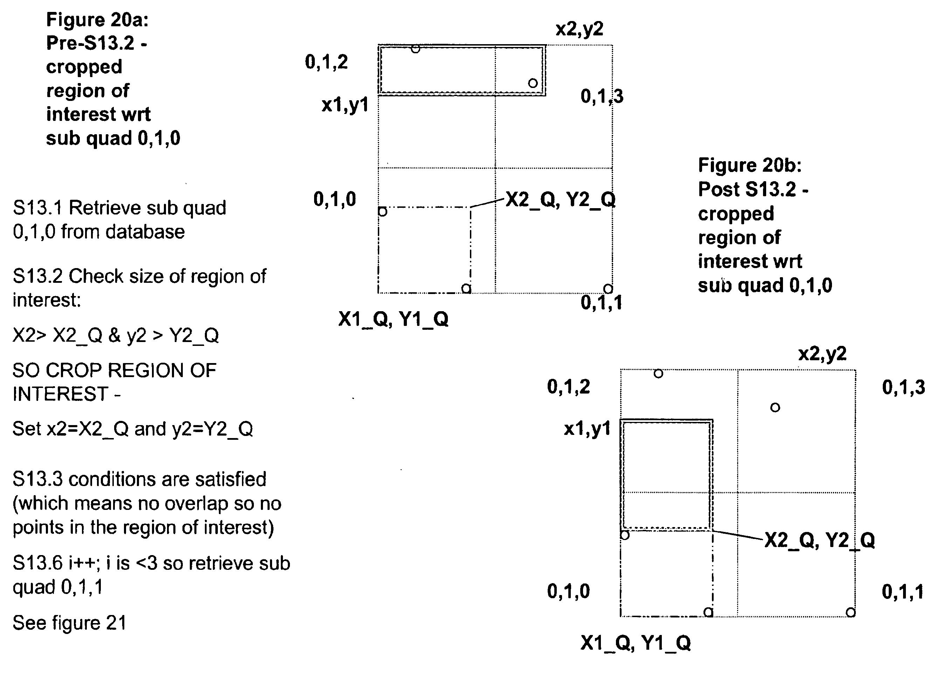

- S13.1.2 Retrieve co-ordinates of points and size of sub-quad from "shrink-wrapped" sub-quad 0,1: set (X1_Q, Y1_Q) (X2_Q, Y2_Q) to size of "shrink-wrapped" sub-quad 0,1;
- S13.2 Assess whether the region of interest requires cropping: x1<X1_Q so set x1=X1_Q and y2>Y2_Q so set y2=Y2_Q;
- S13.3 Assess whether x1>x2 or y1>y2. In this case neither conditions are satisfied;
- S13.4 Assess whether the region of interest (now cropped) overlaps *exactly* with the sub-quad. No:
- S13.5 Retrieve a sub-quad 0,1,0 of the present sub-quad 0,1 in accordance with S13.1.2, as is described with reference to Figures 20a and 20b.

### Figures 20a & 20b

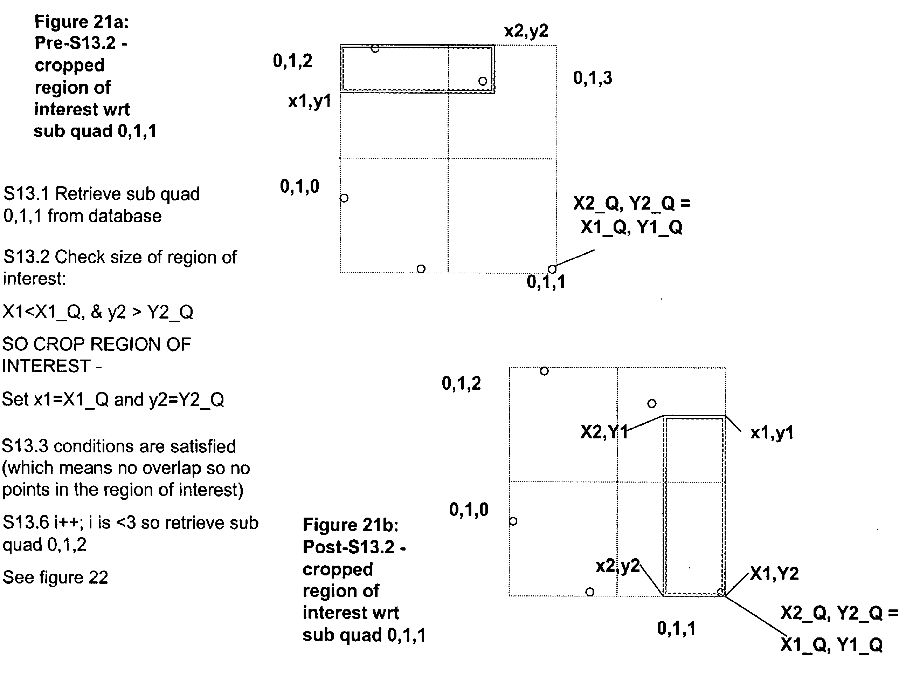

- S13.1.2 Retrieve co-ordinates of points and size of sub-quad from "shrink-wrapped" sub-quad 0,1,0: set (X1_Q, Y1_Q) (X2_Q, Y2_Q) to size of "shrink-wrapped" sub-quad 0,1,0;
- S13.2 Assess whether the region of interest requires cropping: x2>X2_Q so set x2=X2_Q and y2>Y2_Q so set y2=Y2_Q;
- S13.3 Assess whether x1>x2 or y1>y2. In this case (Figure 20b) both conditions are satisfied, which means that there are no points in sub-quad 0,1,0 that fall within the region of interest;
- S13.6 Increment sub-quad counter i at this level (0,1,i), and (S13.6.1) retrieve sub-quad (0,1,1) in accordance with S13.1.2, as is described with reference to Figures 21a and 21b.

### Figures 21a & 21b

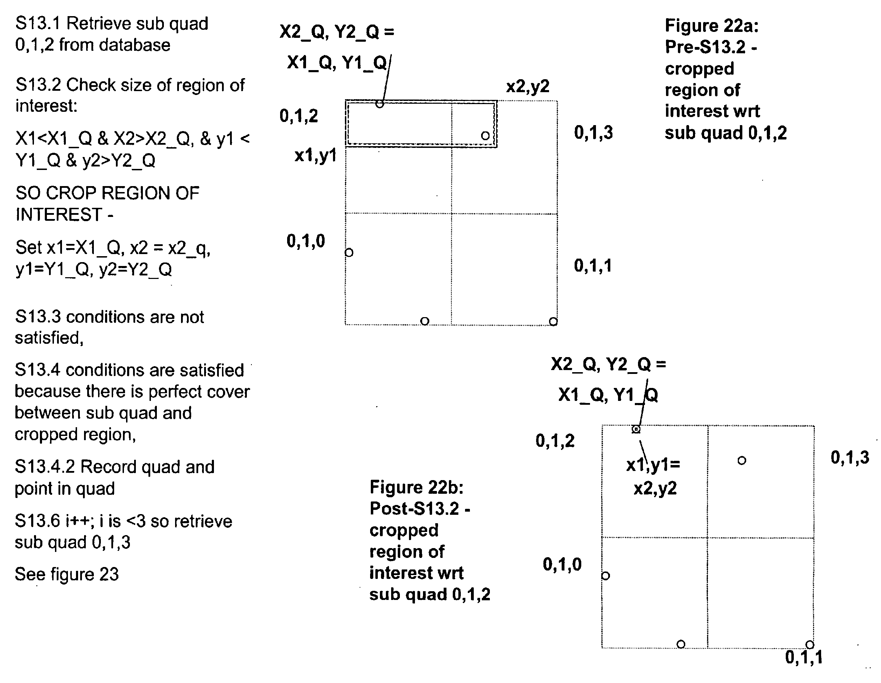

- S13.1.2 Retrieve co-ordinates of points and size of sub-quad from "shrink-wrapped" sub-quad 0,1,1: set (X1_Q, Y1_Q) (X2_Q, Y2_Q) to size of "shrink-wrapped" sub-quad 0,1,1 - i.e. a single point;
- S13.2 Assess whether the region of interest requires cropping: x1 <X1_Q so set x1=X1_Q and y2>Y2_Q so set y2=Y2_Q;
- S13.3 Assess whether x1>x2 or y1>y2. In this case (Figure 21b) both conditions are satisfied, which means that there are no points in sub-quad 0,1,1 that fall within the region of interest;
- S13.6 Increment sub-quad counter i at this level (0,1,i), and (S13.6.1) retrieve sub-quad (0,1,2) in accordance with S13.1.2, as is described with reference to Figures 22a and 22b.

### Figures 22a & 22b

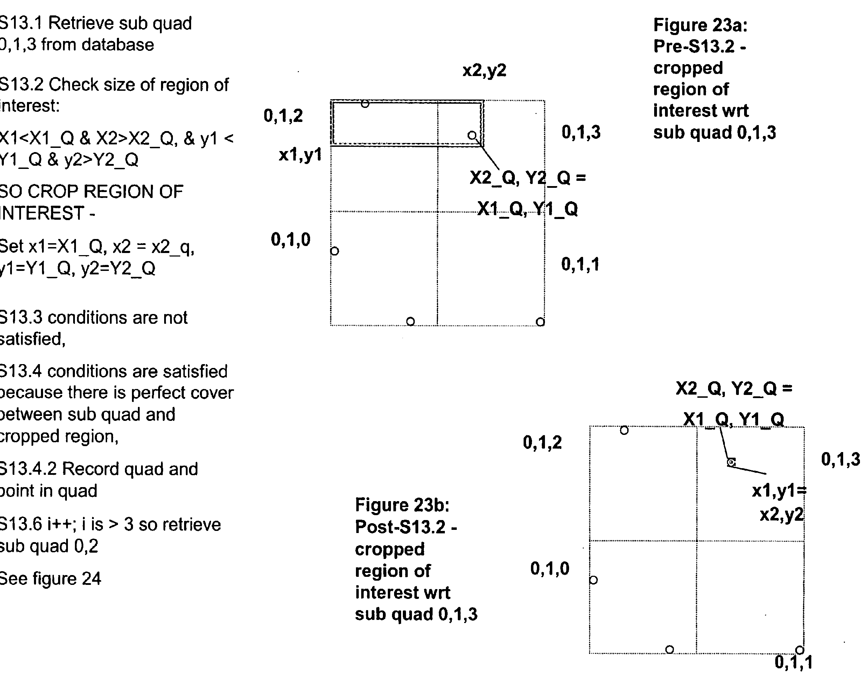

- S13.1.2 Retrieve co-ordinates of points and size of sub-quad from "shrink-wrapped" sub-quad 0,1,2: set (X1_Q, Y1_Q) (X2_Q, Y2_Q) to size of "shrink-wrapped" sub-quad 0,1,2 - i.e. a single point;
- S13.2 Assess whether the region of interest requires cropping: x1 <X1_Q so set x1 =X1_Q, y1 <Y1_Q, x2>X2_Q and y2>Y2_Q so set x1 =X1_Q, y1 =Y1_Q, x2=X2_Q, y2=Y2_Q;
- S13.3 Assess whether x1>x2 or y1>y2. No
- S13.4 Assess whether the region of interest (now cropped) overlaps *exactly* with the sub-quad: YES
- S13.4.2 Record the sub-quad and number of points within the sub-quad (here 1);
- S13.6 Increment sub-quad counter i at this level (0,1,i), and (S13.6.1) retrieve sub-quad (0,1,3) in accordance with S13.1.2, as is described with reference to Figures 23a and 23b.

### Figures 23a & 23b

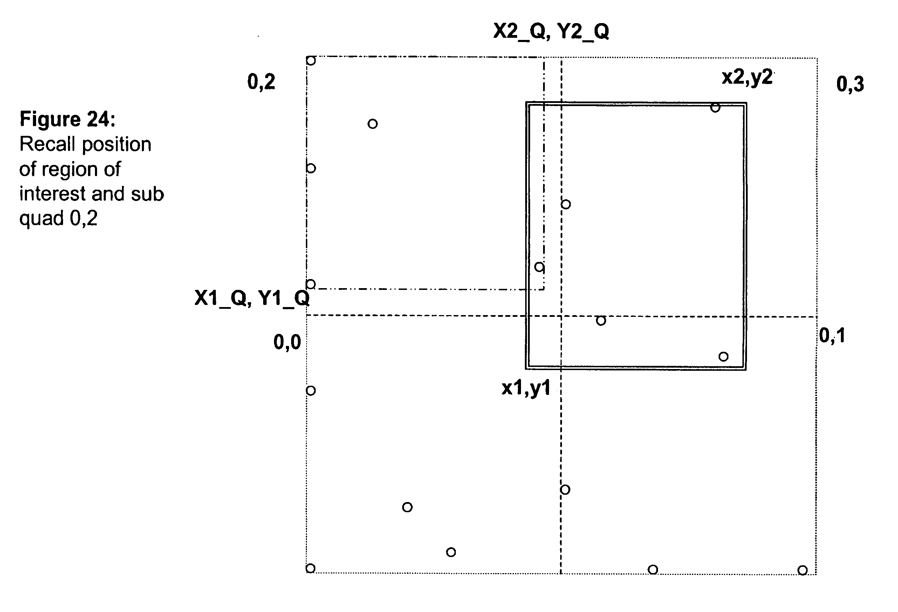

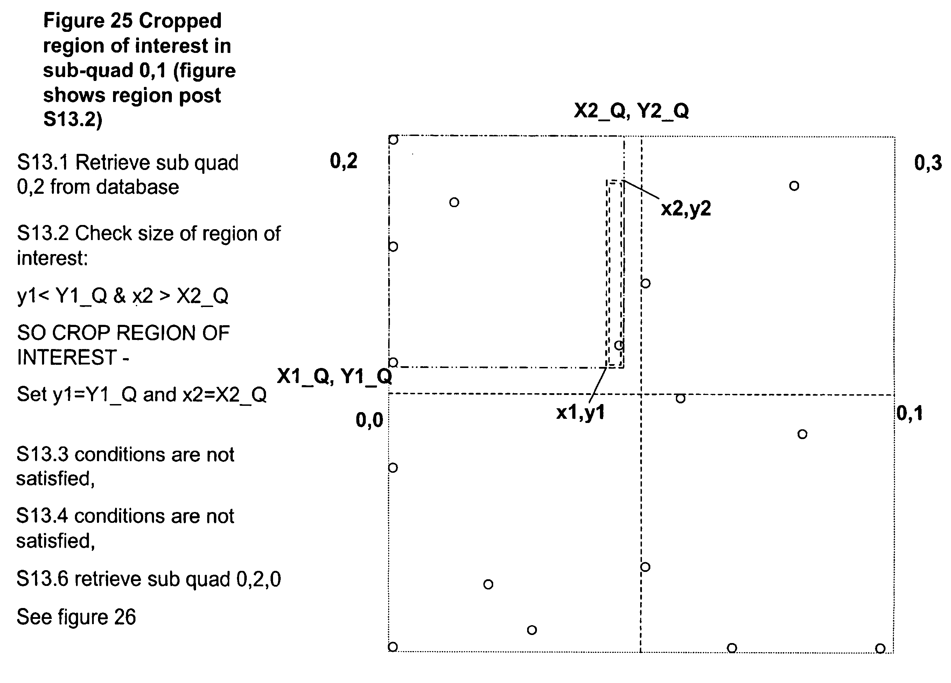

- S13.1.2 Retrieve co-ordinates of points and size of sub-quad from "shrink-wrapped" sub-quad 0,1,3: set (X1_Q, Y1_Q) (X2_Q, Y2_Q) to size of "shrink-wrapped" sub-quad 0,1,3 - i.e. a single point;
- S13.2 Assess whether the region of interest requires cropping: x1<X1_Q so set x1 =X1_Q, y1 <Y1_Q, x2>X2_Q and y2>Y2_Q so set x1 =X1_Q, y1 =Y1_Q, x2=X2_Q, y2 = Y2_Q;
- S13.3 Assess whether x1 >x2 or y1 >y2. No
- S13.4 Assess whether the region of interest (now cropped) overlaps *exactly* with the sub-quad: YES
- S13.4.2 Record the sub-quad and number of points within the sub-quad (here 1);
- S13.6 Increment sub-quad counter i at this level (0,1,i)....i>3 so (S13.6.2) retrieve sub-quad (0,2) in accordance with S13.1.2, as is described with reference to Figures 24 and 25.

### Figures 24 & 25

- S13.1.2 Retrieve co-ordinates of points and size of sub-quad from "shrink-wrapped" sub-quad 0,2: set (X1_Q, Y1_Q) (X2_Q, Y2_Q) to size of "shrink-wrapped" sub-quad 0,2;
- S13.2 Assess whether the region of interest requires cropping: y1<Y1_Q so set y1=Y1_Q and x2>X2_Q so set x2=X2_Q;
- S13.3 Assess whether x1>x2 or y1>y2. In this case neither conditions are satisfied;
- S13.4 Assess whether the region of interest (now cropped) overlaps *exactly* with the sub-quad. No:

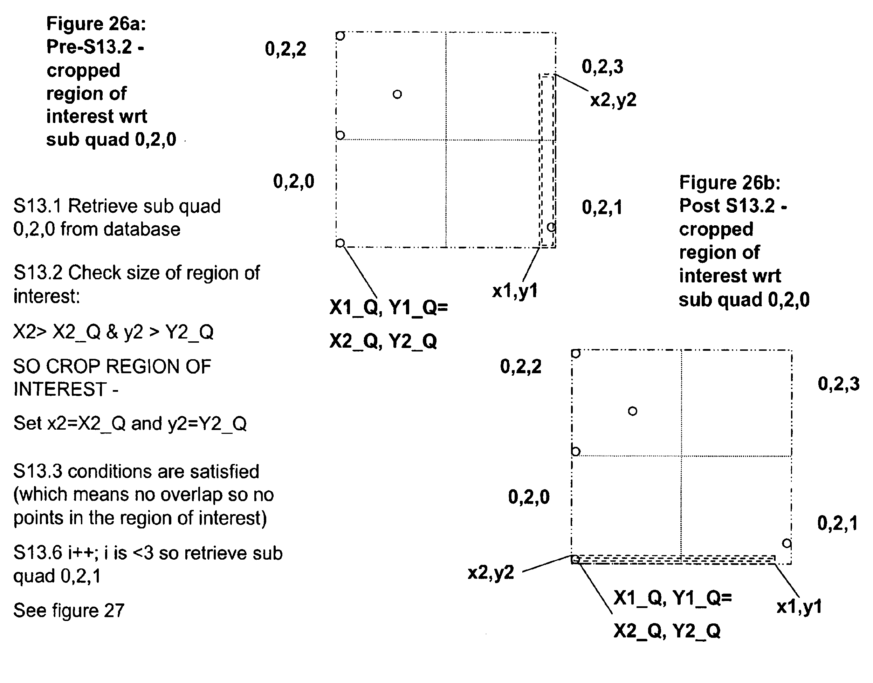

- S13.5 Retrieve a sub-quad 0,2,0 of the present sub-quad 0,2 in accordance with S13.1.2, as is described with reference to Figures 26a and 26b.

### Figures 26a & 26b

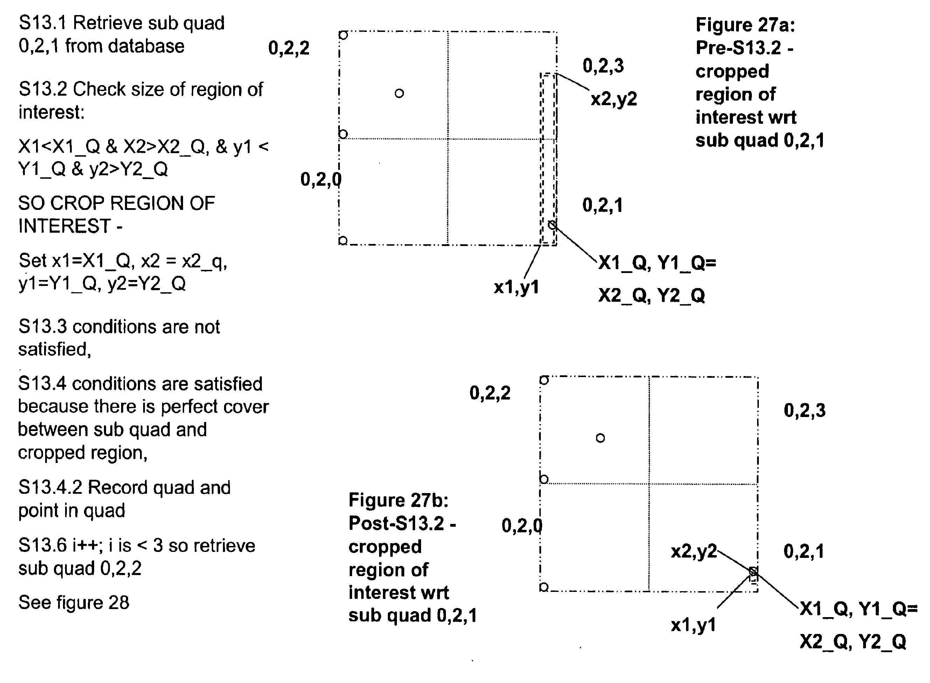

- S13.1.2 Retrieve co-ordinates of points and size of sub-quad from "shrink-wrapped" sub-quad 0,2,0: set (X1_Q, Y1_Q) (X2_Q, Y2_Q) to size of "shrink-wrapped" sub-quad 0,2,0;
- S13.2 Assess whether the region of interest requires cropping: x2>X2_Q so set x2=X2_Q and y2>Y2_Q so set y2=Y2_Q;
- S13.3 Assess whether x1>x2 or y1>y2. In this case (Figure 26b) both conditions are satisfied, which means that there are no points in sub-quad 0,2,0 that fall within the region of interest;
- S13.6 Increment sub-quad counter i at this level (0,2,i), and (S13.6.1) retrieve sub-quad (0,2,1) in accordance with S13.1.2, as is described with reference to Figures 27a and 27b.

### Figures 27a & 27b

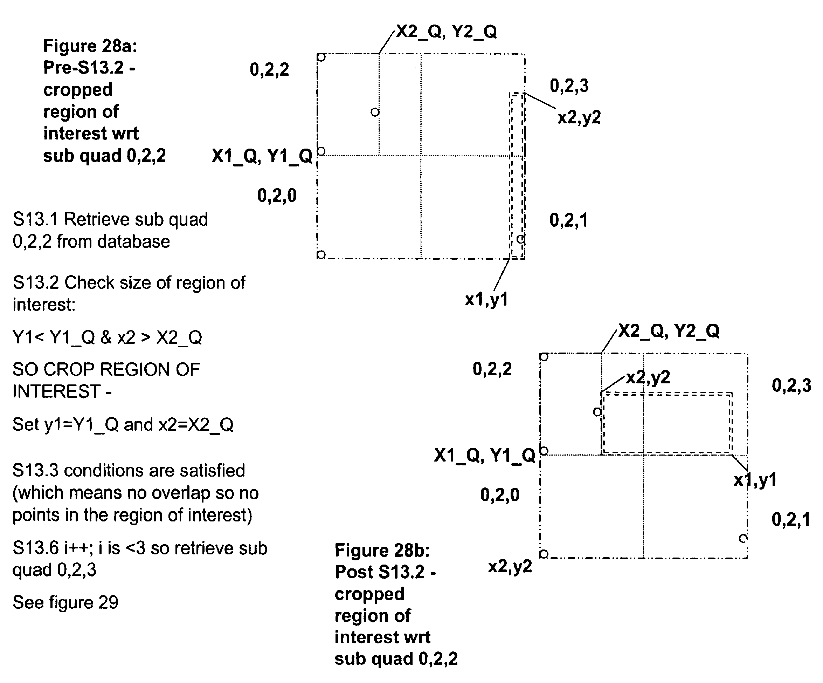

- S13.1.2 Retrieve co-ordinates of points and size of sub-quad from "shrink-wrapped" sub-quad 0,2,1: set (X1_Q, Y1_Q) (X2_Q, Y2_Q) to size of "shrink-wrapped" sub-quad 0,2,1 - i.e. a single point;
- S13.2 Assess whether the region of interest requires cropping: x1 <X1_Q so set x1 =X1_Q, y1 <Y1_Q, x2>X2_Q and y2>Y2_Q so set x1 =X1_Q, y1 = Y1_Q, x2=X2_Q, y2 =Y2_Q;
- S13.3 Assess whether x1 > x2 or y1 > y2. No
- S13.4 Assess whether the region of interest (now cropped) overlaps *exactly* with the sub-quad: YES
- S13.4.2 Record the sub-quad and number of points within the sub-quad (here 1);
- S13.6 Increment sub-quad counter i at this level (0,1,i)....i<3 so (S13.6.1) retrieve sub-quad (0,2,2) in accordance with S13.1.2, as is described with reference to Figures 28a and 28b.

### Figures 28a & 28b

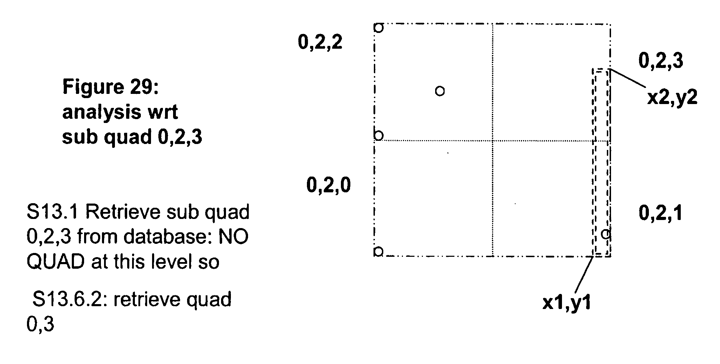

- S13.1.2 Retrieve co-ordinates of points and size of sub-quad from "shrink-wrapped" sub-quad 0,2,2: set (X1_Q, Y1_Q) (X2_Q, Y2_Q) to size of "shrink-wrapped" sub-quad 0,2,2;
- S13.2 Assess whether the region of interest requires cropping: x2>X2_Q so set x2=X2_Q and y1 <Y1_Q so set y1 =Y1_Q;
- S13.3 Assess whether x1>x2 or y1 >y2. In this case (Figure 28b) both conditions are satisfied, which means that there are no points in sub-quad 0,2,2 that fall within the region of interest;
- S13.6 Increment sub-quad counter i at this level (0,2,i), and (S13.6.1) retrieve sub-quad (0,2,3) in accordance with S13.1.2, as is described with reference to Figure 29.

### Figure 29

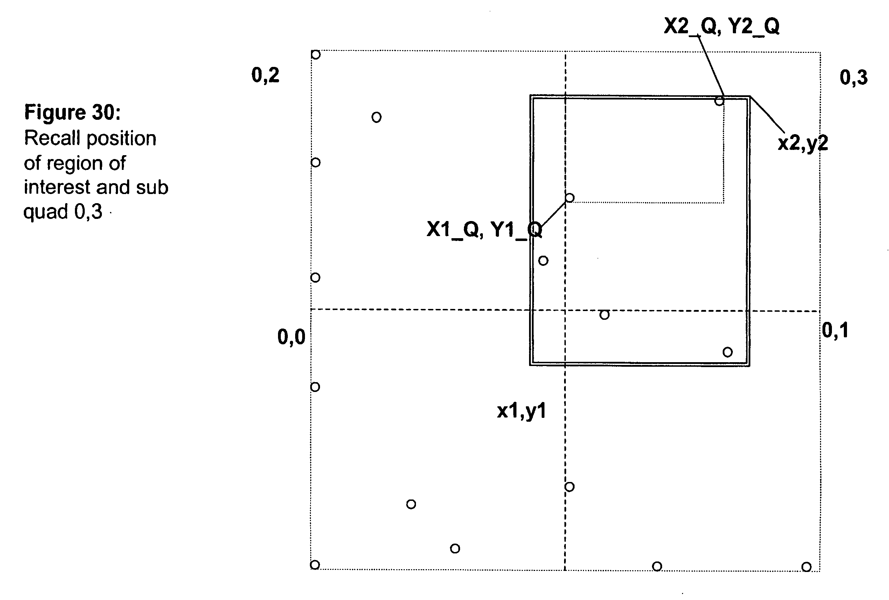

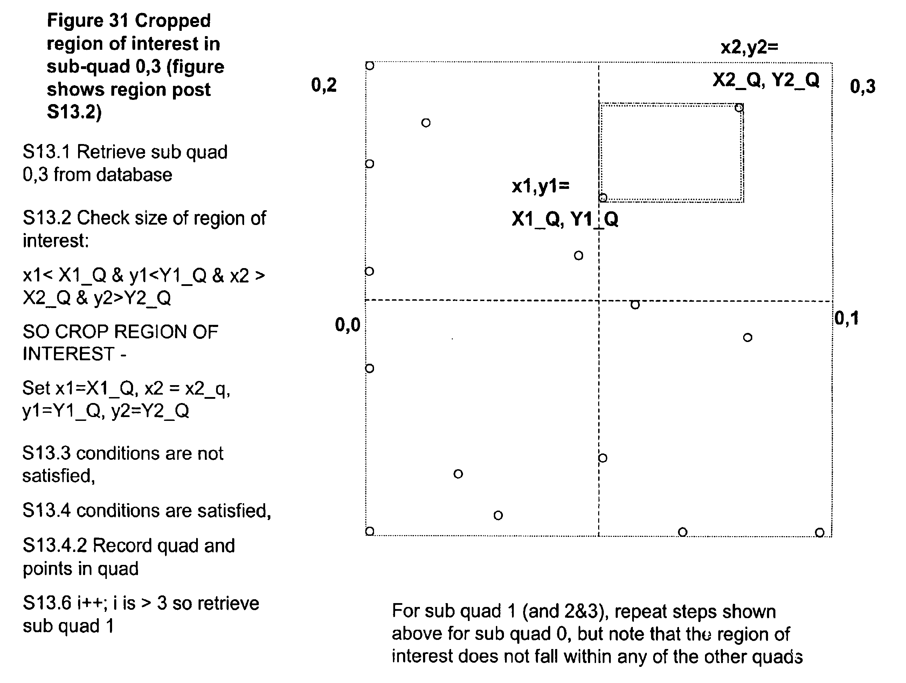

- S13.1.2 Retrieve co-ordinates of points and size of sub-quad from "shrink-wrapped" sub-quad 0,2,3: there is no sub-quad corresponding to 0,2,3 because there are no points in the area corresponding to this sub-quad, so jump to S13.6
- S13.6.2 Increment sub-quad counter i at this level (0,2,i): i>3, so (S13.6.2) retrieve sub-quad (0,3) in accordance with S13.1.2, as is described with reference to Figures 30 and 31.

### Figures 30 & 31

- S13.2 Assess whether the region of interest requires cropping: x1<X1_Q so set x1 =X1_Q, y1 <Y1_Q, x2>X2_Q and y2>Y2_Q so set x1 =X1_Q, y1 =Y1_Q, x2=X2_Q, y2=Y2_Q;
- S13.3 Assess whether x1>x2 or y1>y2. No
- S13.4 Assess whether the region of interest (now cropped) overlaps *exactly* with the sub-quad: YES
- S13.4.2 Record the sub-quad and number of points within the sub-quad (here 2);
- S13.6 Increment sub-quad counter i at this level (0,i)....i>3 so (S13.6.2) retrieve sub-quad 1 in accordance with S13.1.2.
As can be seen from Figure 14, the region of interest falls solely within sub-quad 0 and the sub-quads therein, such that when process described in Figures 13a and 13b is applied to sub-quads 1, 2 and 3, the conditions applied at steps S13.2 and S13.3 will cause the process to terminate within a few steps.

At the end of the process of identifying sub-quads overlapping with the region of interest, the sub-quads, and the number of points within those sub-quads, that were recorded at steps S13.4.2 are returned - for this example:
sub-quad 0,1,2 number of points: 1 point;
sub-quad 0,1,3 number of points: 1 point;
sub-quad 0,2,1 number of points: 1 point;
sub-quad 0,3 number of points: 2 points.

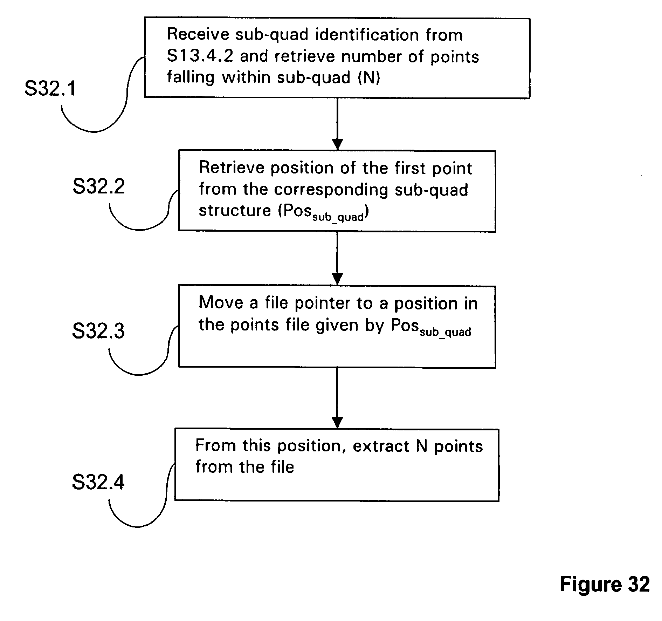

Once the sub-quads have been identified, the actual points are retrieved. In this embodiment, and as described above, the points are stored in a flat file. Furthermore each sub-quad structure stores a number indicating the position, relative to the total number of points being indexed (Referring for example to Figure 4, all of the points within quad 501), of the first point within a respective sub-quad.
The process for actual retrieval of points is shown in Figure 32:
For each quad that was recorded at step S13.4.2:
- S32.1 For that sub-quad retrieve number of points falling within sub-quad (N);
- S32.2 Retrieve position of the first point from the corresponding sub-quad structure (Pos _{sub_quad});
- S32.3 Move a file pointer to a position in the points file given by Pos sub_quad;
- S32.4 From this position, extract N points from the file.

### Implementation

The processes described in Figures 4a and 4b, Figures 13a and 13b and Figure 32 are implemented in software, and run on one of, or distributed between, the terminals T3, T4. Terminals T3, T4 are thus representative of one or a plurality of computers, and are preferably server computers.

Points to be indexed can be input to terminals T3, T4 via a file or similar, the index created as described above can be stored in the database DB1, and the points file can also be stored in the database DB1. An area of interest can be input in the form of a database query, entered via a client terminal (not shown) and communicated over the network N1 to terminals T3, T4 in a known manner.

Preferably the processes described above are implemented in the C programming language, and use recursive programming methods to "burrow down" to sub-quads within sub-quads. It is understood that such a method is inessential to the invention.

### Additional details and modifications

As stated above, the invention can be used to index and retrieve data that is expressed in 2 dimensions. The invention can also be used to index and retrieve data of more than 2 dimensions, providing the data (n-dimensional data, where n>2) can be transformed into 2-dimensions. In such cases the transformed, 2-dimensional, data can be indexed and retrieved according to the invention. For example, objects defined in 3-dimensional space can be transformed into 2-dimensions using a package such as NCAR Graphics, which is a Unix based graphics package that offers a wide range of capabilities for the display and manipulation of numerical data, and has been developed by the University Corporation for Atmospheric Research. (See http://www.dkrz.de/ngdoc/ng4.0.1 for information relating to NCAR graphics and http://ngwww.ucar.edu/ngdoc/ng/fund/chp16-21/threed.html for information relating to the 3 to 2 dimensional transformation aspects).

Other variations could be made. For instance, a simple one would be to use division of quads and sub-quads into different numbers of areas in each iteration, such as eight or ten instead of four.

## Claims

1. A method of building an index to a plurality of entities, wherein each entity is represented by data identifying a point defined in a space, by creating a hierarchy of sub area data structures, the method comprising:
i. creating a minimum bound region around the points representing the entities (S4.2);
ii. performing a process in respect of the created region or sub-region, the process comprising : creating an area or sub-area data structure
storing within the area or sub-area data structure, data specifying the extent of the respective region or sub-region
storing within the area or sub-area data structure, links to points falling within the respective region or sub-region (S4,3);
dividing the region or sub-region to create a plurality of sub regions (S4.6); and
for each of the plurality of sub-regions that contains points:
reducing the sub-region until further reduction thereof would result in one of the points falling outside of the sub-region; and
iii. repeatedly performing the process in respect of each created sub-region that contains points until a predetermined criterion has been satisfied (S4.5);
wherein the method further comprises storing, within each area or sub-area data structure, links to sub-area data structures corresponding to its respective plurality of sub-regions; and wherein the hierarchy of sub- area data structures provides the index to the entities.

2. A method according to claim 1, in which the predetermined criterion is that a sub-region includes a single point.

3. A method according to any one of the preceding claims, in which the step of reducing the region comprises:
calculating distances between points corresponding to entities in each of two dimensions; and
for each of the dimensions, identifying which of the points has the greatest distance between them, such that when the two dimensions are perpendicular to one another the region created is a rectangle, defined by points corresponding to at least two entities.

4. A method according to any one of the preceding claims, in which the region is divided into four sub-regions.

5. A method according to any one of the preceding claims, in which steps ii and iii are repeated recursively.

6. A method according to any one of the preceding claims, including
storing the entities in a database, maintaining a register of number of entities stored in the database, and for each sub region, writing the current register number to the sub-area data structure corresponding thereto.

7. A method according to claim 6, in which entities are written to the database in accordance with size of sub-region, such that entities falling within the smallest sub-regions are written to the database first.

8. A method according to any one of the preceding claims, including receiving a trigger signal for invoking steps i to iii.

9. A method according to any one of the preceding claims, further including retrieving one or more entities that are contained within a predetermined area, wherein the or each entity has been indexed by the method according to any one of the preceding claims, including the steps of:
identifying one or more regions that are contained by the predetermined area, each region encompassing one or more points and being associated with linking data which, for each region, identifies the point or points encompassed by that region; and
accessing linking data corresponding to the identified regions so as to retrieve points encompassed by the identified regions.

10. A method according to claim 9, in which the identifying step includes the steps of:
retrieving data identifying a region;
performing a process in respect of the region, the process comprising the steps of:
comparing extents of the region with extents of the predetermined area in order to establish whether the region overlaps with the predetermined area;
if there is overlap, retrieving data identifying sub-regions of the region and identifying any such sub-regions whose extents are wholly within the predetermined area; and
for each sub-region, repeating the process until all sub-regions thereof falling wholly within the predetermined area are identified,
and the accessing step involves accessing linking data corresponding to the identified sub-regions so as to retrieve points encompassed by the sub-regions.

11. A method according to claim 10, wherein the plurality of points is pre-stored as a list of points in accordance with relationships between respective regions and sub-regions thereof, and the linking data includes a value indicating the position of a first of the corresponding encompassed points in the list of points, and wherein the accessing step comprises, for each of the identified regions:
retrieving an identifier representative of the number of encompassed points and retrieving a position value associated with the identified region;
accessing the list of points and retrieving the number of encompassed points from a position in the list given by the position value.

12. A method according to any one of claims 9 to 11, in which the regions and corresponding linking data are stored in an index.

13. A method according to any one preceding claims 9 to 12, in which the predetermined area corresponds to range information.

14. A method according to claim 13, in which the range information includes any one of geographical range information, operating hours information, delivery time information, and/or medical information.

15. A computer program product comprising a set of instructions to cause a computer to perform the steps of the method according to claims 1 to 14.

## Patentansprüche

1. Verfahren zum Anbringen eines Indexes an mehreren Entitäten,
wobei jede Entität durch Daten repräsentiert wird, die einen in einem Raum definierten Punkt durch Erzeugen einer Hierarchie von Unterbereichs-Datenstrukturen identifizieren, wobei das Verfahren umfasst:
i. Erzeugen einer minimalen Beschränkungsregion um die Punkte, die die Entitäten repräsentieren (S4.2);
ii. Ausführen eines Prozesses in Bezug auf die erzeugte Region oder Unterregion, wobei der Prozess umfasst:
Erzeugen einer Bereichs- oder Unterbereichs-Datenstruktur;
Speichern von Daten, die das Ausmaß der jeweiligen Region oder Unterregion spezifizieren, in der Bereichs- oder Unterbereichs-Datenstruktur;
Speichern von Verknüpfungen zu Punkten, die in die jeweilige Region oder Unterregion fallen, in der Bereichs- oder Unterbereichs-Datenstruktur (S4.3);
Unterteilen der Region oder Unterregion, um mehrere Unterregionen (S4.6) zu erzeugen; und
für jede der mehreren Unterregionen, die Punkte enthalten:
Verkleinern der Unterregion, bis ihre weitere Verkleinerung zur Folge hätte, dass einer der Punkte außerhalb der Unterregion fällt; und
iii. wiederholtes Ausführen des Prozesses in Bezug auf jede erzeugte Unterregion, die Punkte enthält, bis ein vorgegebenes Kriterium erfüllt ist (S4.5);
wobei das Verfahren ferner das Speichern von Verknüpfungen zu Unterbereichs-Datenstrukturen, die ihren jeweiligen mehreren Unterregionen entsprechen, in jeder Bereichs- oder Unterbereichs-Datenstruktur umfasst; und wobei die Hierarchie der Unterbereichs-Datenstrukturen den Index an den Entitäten bereitstellt.

2. Verfahren nach Anspruch 1, wobei das vorgegebene Kriterium ist, dass eine Unterregion einen einzigen Punkt enthält.

3. Verfahren nach einem der vorhergehenden Ansprüche, wobei der Schritt des Verkleinerns der Region umfasst:
Berechnen von Abständen zwischen Punkten, die Entitäten entsprechen, in jeder von zwei Dimensionen; und
für jede der Dimensionen Identifizieren, welche der Punkte den größten Abstand zwischen sich haben, so dass dann, wenn die zwei Dimensionen zueinander senkrecht sind, die erzeugte Region ein Rechteck ist, das durch Punkte definiert ist, die wenigstens zwei Entitäten entsprechen.

4. Verfahren nach einem der vorhergehenden Ansprüche, wobei die Region in vier Unterregionen unterteilt wird.

5. Verfahren nach einem der vorhergehenden Ansprüche, wobei die Schritte ii. und iii. rekursiv wiederholt werden.

6. Verfahren nach einem der vorhergehenden Ansprüche, das umfasst:
Speichern der Entitäten in einer Datenbank, Halten einer Aufzeichnung der Anzahl von Entitäten, die in der Datenbank gespeichert sind, für jede Unterregion und Schreiben der momentan aufgezeichneten Anzahl in die ihr entsprechende Unterbereichs-Datenstruktur.

7. Verfahren nach Anspruch 6, wobei Entitäten in die Datenbank in Übereinstimmung mit der Größe einer Unterregion geschrieben werden, so dass Entitäten, die in die kleinsten Unterregionen fallen, als Erstes in die Datenbank geschrieben werden.

8. Verfahren nach einem der vorhergehenden Ansprüche, das das Empfangen eines Auslösesignals zum Aufrufen der Schritte i. bis iii. umfasst.

9. Verfahren nach einem der vorhergehenden Ansprüche, das ferner das Wiedergewinnen einer oder mehrerer Entitäten, die in einem vorgegebenen Bereich enthalten sind, umfasst, wobei die oder jede Entität durch das Verfahren nach einem der vorhergehenden Ansprüche indexiert worden ist, das die folgenden Schritte umfasst:
Identifizieren einer oder mehrerer Regionen, die in dem vorgegebenen Bereich enthalten sind, wobei jede Region einen oder mehrere Punkte umschließt und wobei jeder Region Verknüpfungsdaten zugeordnet sind, die für jede Region den Punkt oder die Punkte, die von dieser Region umschlossen sind, identifizieren; und
Zugreifen auf Verknüpfungsdaten, die den identifizierten Regionen entsprechen, um so Punkte, die von den identifizierten Regionen umschlossen werden, wiederzugewinnen.

10. Verfahren nach Anspruch 9, wobei der Identifizierungsschritt die folgenden Schritte umfasst:
Wiedergewinnen von Daten, die eine Region identifizieren;
Ausführen eines Prozesses in Bezug auf die Region, wobei der Prozess die folgenden Schritte umfasst:
Vergleichen der Ausmaße der Region mit Ausmaßen des vorgegebenen Bereichs, um festzustellen, ob die Region mit dem vorgegebenen Bereich überlappt; und
falls eine Überlappung besteht, Wiedergewinnen von Daten, die Unterregionen der Region identifizieren und irgendwelche derartigen Unterregionen, deren Ausmaße vollständig innerhalb des vorgegebenen Bereichs liegen, identifizieren; und
für jede Unterregion Wiederholen des Prozesses, bis alle Unterregionen hiervon, die vollständig in den vorgegebenen Bereich fallen, identifiziert sind,
wobei der Zugriffsschritt das Zugreifen auf Verknüpfungsdaten umfasst, die den identifizierten Unterregionen entsprechen, um so Punkte, die von den Unterregionen umschlossen werden, wiederzugewinnen.

11. Verfahren nach Anspruch 10, wobei die mehreren Punkte im Voraus als eine Liste von Punkten in Übereinstimmung mit Beziehungen zwischen jeweiligen Regionen und Unterregionen hiervon gespeichert werden und die Verknüpfungsdaten einen Wert enthalten, der die Position eines Ersten der entsprechenden umschlossenen Punkte in der Liste von Punkten angibt, und wobei der Zugriffsschritt für jede der identifizierten Regionen umfasst:
Wiedergewinnen eines Identifizierers, der die Anzahl umschlossener Punkte repräsentiert, und Wiedergewinnen eines Positionswertes, der der identifizierten Region zugeordnet ist; und
Zugreifen auf die Liste von Punkten und Wiedergewinnen der Anzahl umschlossener Punkte ausgehend von einer Position in der Liste, die durch den Positionswert gegeben ist.

12. Verfahren nach einem der Ansprüche 9 bis 11, wobei die Regionen und die entsprechenden Verknüpfungsdaten in einem Index gespeichert sind.

13. Verfahren nach einem der vorhergehenden Ansprüche 9 bis 12,
wobei der vorgegebene Bereich Reichweiteninformationen entspricht.

14. Verfahren nach Anspruch 13, wobei die Reichweiteninformationen geographische Reichweiteninformationen, Betriebsstundeninformationen, Lieferzeitinformationen und/oder medizinische Informationen umfassen.

15. Computerprogrammprodukt, das einen Satz von Befehlen enthält, um einen Computer dazu zu veranlassen, die Schritte des Verfahrens nach den Ansprüchen 1 bis 14 auszuführen.

## Revendications

1. Procédé de construction d'un index pour une pluralité d'entités, dans lequel chaque entité est représentée par des données identifiant un point défini dans un espace en créant une hiérarchie de structures de données de sous-zone, le procédé comprenant les étapes consistant à:
i. créer une région dotée d'une limite minimale autour des points représentant les entités (54.2),
ii. exécuter un traitement en ce qui concerne la région ou la sous-région créée, le traitement comprenant la création d'une structure de données de zone ou de sous-zone,
mémoriser, à l'intérieur de la structure de données de zone ou de sous-zone, des données spécifiant l'étendue de la région ou de la sous-région respective,
mémoriser, à l'intérieur de la structure de données de zone ou de sous-zone, des liens vers des points se trouvant dans la région ou la sous-région respective,
diviser la région ou la sous-région pour créer une pluralité de sous-régions (S4.6), et
pour chaque sous-région de la pluralité de sous-régions qui contient des points :
réduire la sous-région jusqu'à ce qu'une réduction supplémentaire de celle-ci résulte en ce que l'un des points se trouve à l'extérieur de la sous-région, et
iii. exécuter de manière répétée le traitement en ce qui concerne chaque sous-région créée qui contient des points jusqu'à ce qu'un critère prédéterminé ait été satisfait (S4.5),
où le procédé comprend en outre la mémorisation, à l'intérieur de chaque structure de données de zone ou de sous-zone, des liens vers les structures de données de sous-zone correspondant à sa pluralité respective de sous-régions, et dans lequel la hiérarchie de structures de données de sous-zone procure l'index pour les entités.

2. Procédé selon la revendication 1, dans lequel le critère prédéterminé est qu'une sous-région ne comprenne qu'un seul point.

3. Procédé selon l'une quelconque des revendications précédentes, dans lequel l'étape de réduction de la région comprend les étapes consistant à :
calculer les distances entre des points correspondant à des entités dans chacune des deux dimensions, et
pour chacune des dimensions, identifier le point parmi les points qui présente la plus grande distance entre-eux, de sorte que, lorsque les deux dimensions sont perpendiculaires l'une à l'autre, la région créée soit un rectangle défini par des points correspondant à au moins deux entités.

4. Procédé selon l'une quelconque des revendications précédentes, dans lequel la région est divisée en quatre sous-régions.

5. Procédé selon l'une quelconque des revendications précédentes, dans lequel les étapes ii et iii sont répétées de manière récursive.

6. Procédé selon l'une quelconque des revendications précédentes, comprenant les étapes consistant à
mémoriser les entités dans une base de données, entretenir un registre du nombre d'entités mémorisées dans la base de données et, pour chaque sous-région, écrire le numéro de registre en cours dans la structure de données de sous-zone correspondant à celui-ci.

7. Procédé selon la revendication 6, dans lequel les entités sont écrites dans la base de données conformément à la taille de la sous-région, de sorte que les entités se trouvant dans les sous-régions les plus petites soient écrites les premières dans la base de données.

8. Procédé selon l'une quelconque des revendications précédentes, comprenant l'étape consistant à recevoir un signal de déclenchement destiné à appeler les étapes i à iii.

9. Procédé selon l'une quelconque des revendications précédentes, comprenant en outre la récupération d'une ou plusieurs entités qui sont contenues au sein d'une zone prédéterminée, dans lequel, l'entité ou chaque entité a été indexée par le procédé selon l'une quelconque des revendications précédentes, comprenant les étapes consistant à :
identifier une ou plusieurs régions qui sont contenues par la zone prédéterminée, chaque région englobant un ou plusieurs points et étant associée aux données de lien qui, pour chaque région, identifient le point ou les points englobés par cette région, et
accéder aux données de lien correspondant aux régions identifiées de manière à récupérer des points englobés par les régions identifiées.

10. Procédé selon la revendication 9, dans lequel l'étape d'identification comprend les étapes consistant à :
récupérer des données identifiant une région,
exécuter un traitement en ce qui concerne la région, le traitement comprenant les étapes consistant à :
comparer les étendues de la région aux étendues de la zone prédéterminée afin d'établir si la région est en chevauchement avec la zone prédéterminée,
s'il existe un chevauchement, récupérer des données identifiant les sous-régions de la région et identifiant toutes les sous-régions dont les étendues sont complètement à l'intérieur de la zone prédéterminée, et
pour chaque sous-région, répéter le traitement jusqu'à ce que toutes ces sous-régions se trouvant complètement à l'intérieur de la zone prédéterminée soient identifiées,
et l'étape d'accès implique le fait d'accéder à des données de lien correspondant aux sous-régions identifiées de manière à récupérer des points englobés par les sous-régions.

11. Procédé selon la revendication 10, dans lequel la pluralité de points est prémémorisée sous la forme d'une liste de points conformément aux relations entre leurs régions et sous-régions respectives, et les données de lien comprennent une valeur indiquant la position d'un premier point parmi les points englobés correspondants dans la liste de points, et
dans lequel l'étape d'accès comprend, pour chacune des régions identifiées les étapes consistant à :
récupérer un identificateur représentatif du nombre de points englobés et récupérer une valeur de position associée à la région identifiée,
accéder à la liste de points et récupérer le nombre de points englobés à partir d'une position dans la liste donnée par la valeur de position.

12. Procédé selon l'une quelconque des revendications 9 à 11, dans lequel les régions et les données de lien correspondantes sont mémorisées dans un index.

13. Procédé selon l'une quelconque des revendications précédentes 9 à 12, dans lequel la zone prédéterminée correspond à des informations de plage.

14. Procédé selon la revendication 13, dans lequel les informations de plage comprennent des informations quelconques parmi des informations de plage géographique, des informations d'heures de fonctionnement, des informations d'instant de délivrance, et/ou des informations médicales.

15. Produit de programme informatique comprenant un ensemble d'instructions destiné à amener un ordinateur à exécuter le procédé selon les revendications 1 à 14.
